# EUROPEAN PATENT APPLICATION

(11) **EP 0 978 670 A2**
(43) Date of publication of application: **09.02.2000**
(21) Application number: 99114071.6
(22) Date of filing: 20.07.1999
(51) Int. Cl.: F16H 59/02

(54) **Vehicle drive system adapted to prevent erroneous shifting of transmission, and shift lever position detecting device**

(30) Priority: 03.08.1998 JP 21874298; 02.10.1998 JP 28106598; 06.11.1998 JP 31635698
(71) Applicant: TOYOTA JIDOSHA KABUSHIKI KAISHA, Aichi-ken 471-8571 (JP)
(72) Inventor: Nakao, Michiaki, Toyota-shi, Aichi-ken 471-8571 (JP); Ohi, Takao, Toyota-shi, Aichi-ken 471-8571 (JP); Yamada, Masanobu, Toyota-shi, Aichi-ken 471-8571 (JP); Ogawa, Shinji, Toyota-shi, Aichi-ken 471-8571 (JP)
(74) Representative: Pellmann, Hans-Bernd, Dipl.-Ing.

(57) **Abstract**

Vehicle drive device including a transmission (16) and a shift lever device (172, 200, 206, 212, 218, 224, 230, 236, 242) constructed to support a shift lever (17) such that the shift lever is shifted from a manual forward-shift position for manually shifting up and down the transmission, to another operating position of the transmission, by a first movement of the shift lever from the manual forward-shift position to a turning point in a first direction and at least a second movement of the shift lever from the turning point in a second direction which intersects the first direction so as to prevent the second movement of the shift lever to prevent a shifting of the shift lever to the above-indicated another operating position, wherein the shift lever device including a biasing device for biasing the shift lever from the turning point toward the manual forward-shift position, and the transmission is held in the currently established forward drive position even when the shift lever is located at the turning point. Also disclosed is a device including ON-OFF switches (SW1-SW4) for detecting a currently established one of the operating positions of the shift lever.

## Description

### BACKGROUND OF THE INVENTION

### Field of the Invention

The present invention relates in general to shifting of a transmission of an automotive vehicle by a shift lever, and more particularly to a technique for preventing an unintended operation of the shift lever during forward running of the vehicle. This invention is further concerned with a position detecting device for detecting operating positions of the shift lever, and more particularly to such a position detecting device which includes a plurality of ON-OFF switches for detecting a forward drive position, a reverse drive position and a neutral position of the shift lever and which permits detection of these positions even in the event of a failure of one of the ON-OFF switches.

### Discussion of the Prior Art

One type of known vehicle drive systems for transmitting a drive force from a drive power source such as an engine to drive wheels through a speed changing transmission includes (a) a transmission having a plurality of operating positions including a plurality of forward drive positions, a power cut-off position and a rear drive position, (b) a shifting actuator device including hydraulic cylinders, for selectively establishing one of the operating positions of the transmission, and (c) a controller for controlling the shifting actuator device on the basis of output signals of detector switches adapted to detect an operation of a shift lever of a shift lever device, so that the transmission is shifted from one of its operating positions to another. The shift lever device generally used in such a vehicle drive system has a shift pattern such that the shift lever is manually shiftable or movable from a manual forward-shift position to a selected one of a shift-up position and a shift-down position. While the vehicle is running forward with the shift lever placed in the manual forward-shift position, a currently selected or established one of the forward drive positions of the transmission is maintained. The shift-up and shift-down positions are provided for manually shifting up and down the transmission, respectively, during the forward running of the vehicle, so that the transmission is shifted from the currently selected one of the forward drive positions to another. For instance, the shift-up and shift-down positions are located on the opposite sides of the manual forward-shift position. Usually, the shift lever has a neutral position and a reverse drive position for establishing the power cut-off position and the rear drive position of the transmission, respectively. The shift lever provided in a vehicle drive system disclosed in JP-U-5-71537 has the neutral position which is spaced from the manual forward-shift position in the lateral direction (width direction) of the vehicle. This shift lever is shifted from the manual forward-shift position to the shift-up and shift-down positions in the longitudinal or running direction of the vehicle, and is shifted from the manual forward-shift position to the neutral position in the lateral direction which is perpendicular to the longitudinal direction.

In the vehicle drive system as disclosed in JP-U-5-71537, the shift lever may be moved in the lateral direction of the vehicle by an unintentional hit of one of the vehicle operator's knees against the shift lever, during a forward running of the vehicle with the shift lever placed in its manual forward-shift position. In this case, the shift lever may be shifted from the manual forward-shift position to the neutral position, causing the transmission to be brought to its power cut-off position, in the absence of an intention of the vehicle operator to establish the power cut-off position, so that a drive force is not transmitted to the vehicle drive wheels unexpectedly to the vehicle operator.

The vehicle drive system of JP-U-5-71537 uses a shift lever position detecting device including a plurality of ON-OFF switches or stroke switches for detecting a currently selected established one of the operating positions of the shift lever, that is, the manual forward-shift position, the reverse drive position, the neutral position, and the shift-up and shift-down positions to which the shift lever is shiftable from the manual forward-shift position for manually shifting up and down the transmission.

In the event of a failure or abnormality of any one of the ON-OFF or stroke switches of the shift lever position detecting device, the control device is not capable of detecting the currently established operating position of the shift lever. In this event, the shifting of the transmission cannot be controlled in the correct manner for adequate running of the vehicle. Where the shift lever position detecting device uses stroke switches, these stroke switches require initial calibration involving testing of the vehicle drive system for adjustment of the detecting device by learning using test data. This initial calibration results in an increase in the cost of adjustment of the shift lever position detecting device.

### SUMMARY OF THE INVENTION

It is therefore a first object of the present invention to provide a drive system of an automotive vehicle having a shift lever device which is adapted to prevent a movement of the shift lever from the manual forward-shift position to another position, due to unintentional hitting of any part of the body of the vehicle operator against the shift lever, during forward running of the vehicle with the shift lever placed in the manual forward-shift position.

A second object of this invention is to provide a shift lever device for an automotive vehicle, which is adapted to prevent such a movement of the shift lever from the manual forward-shift position to another.

A third object of the present invention is to provide an inexpensive detecting device which is capable of detecting the forward and reverse drive positions and the neutral position of the shift lever, using a plurality of ON-OFF switches, even in the event of a failure of any one of these ON-OFF switches.

The first object indicated above may be achieved according to a first aspect of this invention, which provides a drive system of an automotive vehicle including a transmission having a plurality of operating positions including a plurality of forward drive positions for forward running of the vehicle, a shifting actuator device for selectively establishing one of the plurality of operating positions, and a shift lever device including a shift lever which has a manual forward-shift position for maintaining a currently established one of the forward drive positions or manually shifting up or down the transmission during forward running of the vehicle with the transmission placed in the currently established forward drive position, and another operating position other than the manual forward-shift position, the drive system being characterized in that the shift lever device is constructed to support the shift lever such that the shift lever is shifted from the manual forward-shift position to the above-indicated another operating position by a first movement thereof from the manual forward-shift position to a first turning point in a first direction and at least a second movement thereof from the first turning point in a second direction which interests the first direction so as to prevent the second movement and thereby to prevent a shifting of the shift lever to the above-indicated another operating position even when a force acts on the shift lever in a direction substantially parallel to the first direction, the shift lever device including a biasing device for biasing the shift lever from the first turning point toward the manual forward-shift position, and wherein position holding means is operatively associated with the shifting actuator device such that the transmission is held in the currently established forward drive position while the shift lever is located at one of or between the manual forward-shift position and the first turning point.

In the vehicle drive system constructed according to the first aspect of this invention, a movement of the shift lever includes the first movement from the manual forward-shift position to the first turning point in the first direction and at least the second movement from the first turning point in the second direction which intersects the first direction. Further, the shift lever is biased in a direction from the first turning point toward the manual forward-shift position. Since the second direction intersects the first direction so as to prevent the second movement in the second direction even when a force acts on the shift lever in a direction substantially parallel to the first direction, the shift lever is prevented from being erroneously shifted from the manual forward-shift position to the above-indicated another position such as the neutral position, unexpectedly to the vehicle operator, during forward running of the vehicle with the shift lever being placed in the manual forward-shift position and with the transmission being placed in one of the forward drive position. Described in more detail, suitable position holding means is provided to operate or control the shifting actuator device such that the transmission is held in the currently established forward drive position while the shift lever is located at the first turning point or between the manual forward-shift position and the first turning point, namely, even when the shift lever has been moved to the first turning point due to unintentional hitting of the operator's body against the shift lever. Thus, the first movement of the shift lever from the manual forward-shift position to the first turning point in the first direction will not cause a change in the operating state of the transmission, which would be unexpected to the vehicle operator during the forward running of the vehicle.

The principle of this invention is suitably applicable to a vehicle drive system wherein the shift lever is located on an inner side of the vehicle operator's seat, or at a suitable position on an instrument panel which is disposed in front of the vehicle operator's seat and obliquely to the seat inwardly of the vehicle. However, the principle of the invention is also applicable to a vehicle drive system wherein the shift lever is disposed on the steering column of the vehicle. The shift lever having the manual forward-shift position and the above-indicated another operating position such as the neutral position may further has an automatic forward-shift position in which the shifting actuator device is controlled in an automatic shifting mode to establish one of the plurality of forward drive positions of the transmission, on the basis of running conditions or parameters of the vehicle such as an amount of operation of an accelerator pedal or an amount of opening of a throttle valve of the vehicle, and the running speed of the vehicle.

The transmission, which has the two or more forward-drive positions and requires a power cut-off position for cutting off a drive force to be transmitted to the vehicle drive wheels, may be of any known type such as a parallel two-axes type, a planetary gear type, or a continuously variable type transmission modified to provide different speed ratios. The parallel two-axes type transmission has a plurality of gear pairs which have different gear ratios and each of which consists of two gears that are mounted on respective two parallel shafts, and a plurality of coupling clutches for the respective gear pairs. The planetary gear type has a plurality of planetary gear sets, and a plurality of clutches and brakes for selectively connecting rotary elements of the planetary gear sets to each other or to a stationary member such as a housing of the transmission. The modified continuously variable type transmission may be a belt-and-pulley type wherein different speed ratios are obtained by changing the effective diameters of pulleys engaging a belt.

The shift lever may have a shift-up position and a shift-down position to which the shift lever is shifted from the manual forward-shift position to manually shift up and down the transmission, respectively. In this case, the movements of the shift lever to those shift-up and shift-down positions are detected by suitable switches, and the shifting actuator device is controlled on the basis of the output signals of these switches to shift up or down the transmission. However, the shift lever need not have such shift-up and shift-down positions for manually shifting up and down the transmission. For instance, the transmission may be manually shifted up and down in response to an operation of a manually operated manual shift switch provided on the steering wheel, for example. Where the shift lever has the shift-up and shift-down positions, the shift lever is preferably biased by a spring or other suitable biasing device toward the manual forward-shift position.

In the shift lever device of the present vehicle drive system constructed as described above, the shifting of the shift lever from the manual forward-shift position to the above-indicated another position such as the neutral position requires at least two linear movements in the different directions, that is, the first movement in the first direction and at least the second movement in the second direction. Although the second direction is preferably substantially perpendicular to the first direction, to provide an intersection of the two directions at about 90° at the first turning point, the second direction need not be substantially perpendicular to the first direction, as long as the angle of intersection is determined so as to prevent the second movement of the shift lever when a force acts on the shift lever in the first direction. For instance, an inclination of about 45° of the second direction with respect to the first direction may be sufficient to provide a resistance to the second movement of the shift lever in the second direction and thereby to prevent the shifting of the shift lever to the above-indicated another operating position. Thus, the first turning point need not provide a 90° or sharp turn upon transition of the first movement to the second movement. Where the inclination angle of the second direction with respect to the first direction (the angle of turn at the first turning point) is about 60° or more (up to 90°), the force acting on the shift lever in the first direction is not likely to permit the second movement of the shift lever and its shifting to the above-indicated another position.

In the present vehicle drive system according to the first aspect of the invention, the shifting of the shift lever from the manual forward-shift position to the above-indicated another position requires the first and second movements of the shift lever in a given plane (usually, in the horizontal plane). Further, the principle of the invention requires that the second direction intersect the first direction so as to prevent the second movement of the shift lever in the above-indicated plane. However, the shift lever device may be constructed such that the shifting of the shift lever from the manual forward-shift position to the above-indicated above position requires a further operation of the shift lever, such as a movement substantially perpendicular to the above-indicated plane (e.g., an upward or downward movement of the shift lever), or an operation of a given member such as a pushbutton.

According to one preferred form of the first aspect of this invention, the position holding means includes a shift lever sensor device for detecting an operation of the shift lever, and a controller electrically connected to the shifting actuator device for controlling the shifting actuator device on the basis of output signals of the lever position sensor device, so that the transmission is held in the currently established forward drive position while the shift lever is located between the manual forward-shift position and the first turning point or located at the first turning point.

According to a second preferred form of the first aspect of the invention, wherein the plurality of operating positions of the transmission further includes a power cut-off position for cutting off a drive force to be transmitted to drive wheels of the automotive vehicle, and the above-indicated another operating position of the shift lever is a neutral position for establishing the power cut-off position of the transmission. In this form of the invention, an erroneous shifting of the shift lever from the manual forward-shift position to the neutral position is effectively prevented, thereby preventing an unexpected shifting of the transmission to the power cut-off position and consequent disconnection of the vehicle drive wheels from the drive power source. In other words, the transmission can be held in the currently established forward drive position even if the shift lever is erroneously operated by the vehicle operator from the manual forward-shift position to the first turning point during forward running of the vehicle with the shift lever placed in the manual forward-shift position.

In one advantageous arrangement of the above first preferred form of the invention, the plurality of operating positions of the transmission further include a rear drive position for backward running of the automotive vehicle, and the shift lever further has a reverse drive position for establishing the rear drive position of the transmission. In this arrangement, the shift lever device is further constructed to support the shift lever such that the shift lever is shifted from the neutral position to the reverse drive position by a third movement thereof from the neutral position to a second turning point in a third direction and at least a fourth movement thereof from the second turning point in a fourth direction which intersects the third direction so as to prevent the fourth movement and thereby to prevent a shifting of the shift lever to the reverse drive position even when a force acts on the shift lever in a direction substantially parallel to the third direction. Further, the shift lever device includes a biasing device for biasing the shift lever from the second turning point toward the neutral position, and the position holding means is operatively associated with the shifting actuator device such that the transmission is held in the power cut-off position while the shift lever is located at one of or between the neutral position and the second turning point.

In the vehicle drive system described above, the shifting of the shift lever from the neutral position to the reverse drive position requires the third movement from the neutral position to the second turning point in the third direction and at least the fourth movement from the second turning point in the fourth direction. Since the shift lever is biased from the second turning point toward the neutral position, and since the fourth direction intersects with the third direction so as to prevent the fourth movement of the shift lever when a force acts on the shift lever in the third direction, the shift lever is prevented from being shifted from the neutral position to the reverse drive position unexpectedly to the vehicle operator. Further, the position holding means is operatively associated with the shifting actuator device so as to hold the transmission in the power cut-off position even when the shift lever is moved to the second turning point, the third movement of the shift lever to the second turning point will not cause an erroneous shifting of the transmission to the rear drive position, which would cause the vehicle to start a rearward running of the vehicle unexpectedly to the vehicle operator.

The third direction may be substantially perpendicular to said second directions. Where the second direction is parallel to the running or longitudinal direction of the vehicle, the third direction may be substantially parallel to the width or lateral direction of the vehicle. The third and fourth directions may be substantially perpendicular to each other. Where the shift lever has a shift-up position and a shift-down position to which the shift lever is shiftable from the manual forward-shift position to manually shift up and down the transmission, respectively, the fourth direction may be parallel to a shifting direction in which the shift lever is shifted from the manual forward-shift position to the shift-up and shift-down positions. The shifting direction is preferably parallel to the vehicle running direction.

According to a third preferred form of the first aspect of this invention, the shift lever device further includes a resisting mechanism for giving a resistance to the second movement of the shift lever from the first turning point to the above-indicated another operating position in the second direction such that the resistance has a peak value when the shift lever is located intermediate between the first turning point and the above-indicated another operating position.

In the advantageous arrangement of the second preferred form of the invention described above wherein the shift lever has the neutral position for establishing the power cut-off position of the transmission, the shift lever device may further include a resisting mechanism for giving a resistance to the second movement of the shift lever from the second turning point to the reverse drive position, such that the resistance has a peak value when the shift lever is located intermediate between the second turning point and the reverse drive position.

The resisting mechanisms indicated above assure increased stability and reliability to prevent an unintentional movement of the shift lever from the manual forward-shift position to the neutral position or from the neutral position to the reverse drive position. The resisting mechanisms are also effective to prevent a movement of the shift lever from the neutral position back to the manual forward-shift position or from the reverse drive position back to the neutral position.

The resisting mechanisms may include a spring and a cam, or a sheet spring having recessed and raised portions. To move the shift lever from the first turning point to the neutral position from the second turning point to the reverse drive position, the peak value of the resistance to the movement of the shift lever given by the resisting mechanisms must be overcome by a force which acts on the shift lever in the second or fourth direction.

In a further alternative arrangement, the shift lever device is further constructed to support the shift lever such that the shift lever is shifted from the first turning point to the automatic forward-shift position by a movement thereof in the second direction.

Where the shift lever has the neutral position and the automatic forward-shift position for automatic shifting of the transmission depending upon the running conditions of the vehicle, the shift lever device may be further constructed to support the shift lever such that the shift lever is shifted from the manual forward-shift position to the automatic forward-shift position by a movement thereof in a direction which is parallel and opposite to the first direction.

Alternatively, the shift lever device may be further constructed to support the shift lever such that the shift lever is shifted from the first turning point to the automatic forward-shift position by a movement thereof in a direction which is parallel and opposite to the second direction. Further alternatively, the shift lever device may be further constructed to support the shift lever such that the shift lever is shifted from the neutral position to the automatic forward-shift position by a movement thereof in the second direction.

Where the shift lever has the neutral position, reverse drive position and automatic forward-shift position described above, the shift lever device may be further constructed to support the shift lever such that the shift lever is shifted from the second turning point to the automatic forward-shift position by a movement thereof in a direction which is parallel and opposite to the fourth direction.

Alternatively, the the shift lever device may be further constructed to support the shift lever such that the shift lever is shifted from the second turning point to the automatic forward-shift position by a movement thereof in the third direction.

In a further alternative arrangement, the shift lever device is further constructed to support the shift lever such that the shift lever is shifted from the neutral position to the automatic forward-shift position by a movement thereof in a direction which is parallel and opposite to the third direction.

According to a fourth preferred form of the first aspect of this invention, the shift lever further has a shift-up position and a shift-down position which are located on opposite sides of the manual forward-shift position and to which the shift lever is shiftable from the manual forward-shift position for manually shifting up and down the transmission, respectively, and the shift-up and shift-down positions are spaced from each other in a shifting direction which intersects the first direction. The shifting direction may be substantially parallel to a running direction of the automotive vehicle. In this case, the first direction may be substantially perpendicular to the shifting direction, and the first and second directions may be substantially perpendicular to each other.

The second object indicated above may be achieved according to a second aspect of this invention, which provides a shift lever device including a shift lever for shifting a transmission of an automotive vehicle, the transmission having a plurality of operating positions including a plurality of forward drive positions for forward running of the vehicle, which are selectively established by a shifting actuator device, the shift lever having a manual forward-shift position for maintaining a currently established one of the forward drive positions or manually shifting up or down the transmission during forward running of the vehicle with the transmission placed in the currently established forward drive position, and another operating position other than the manual forward-shift position, characterized in that the shift lever is supported such that the shift lever is shifted from the manual forward-shift position to the above-indicated another operating position by a first movement thereof from the manual forward-shift position to a first turning point in a first direction and at least a second movement thereof from the first turning point in a second direction which intersects the first direction so as to prevent the second movement and thereby to prevent a shifting of the shift lever to the above-indicated another operating position even when a force acts on the shift lever in a direction substantially parallel to the first direction, so that the transmission is held in the currently established forward drive position while the shift lever is located at one of or between the manual forward-shift position and the first turning point, and a biasing device is provided for biasing the shift lever from the first turning point toward the manual forward-shift position.

The shift lever device constructed as described above according to the second aspect of the invention has substantially the same advantages as described above with respect to the vehicle drive device according to the first aspect of the invention.

The third object indicated above may be achieved according to a third aspect of the present invention, which provides a shift lever position detecting device for detecting a currently established one of five operating positions of a shift lever for shifting a transmission of an automotive vehicle, the five operating positions consisting of a manual forward-shift position for permitting the transmission to be manually shifted up and down from one of a plurality of forward drive positions thereof to another, a reverse drive position for placing the transmission in a rear drive position, a neutral position located between the manual forward-shift position and the reverse drive position for placing the transmission in a power cut-off position, a shift-up position which is located next to the manual forward-shift position and to which the shift lever is shiftable from the manual forward-shift position for manually shifting up the transmission, and a shift-down position which is located next to the manual forward-shift position and to which the shift lever is shiftable from the manual forward-shift position for manually shifting down the transmission, characterized by comprising three or four ON-OFF switches each of which is mechanically switched between ON and OFF states thereof depending upon a movement of the shift lever to at least one of the five operating positions such that five combinations of the operating states of the ON-OFF switches when the shift lever is placed in the five operating positions when the three or four ON-OFF switches are all normal are different from each other, each ON-OFF switch generating a first signal whose level is low and high when each ON-OFF switch is in the ON and OFF states, respectively, and a second signal whose level is high and low when each ON-OFF switch is in the ON and OFF states, respectively; first position judging means for determining one of the five operating positions in which the shift lever is placed, according to a first position judging rule consisting of the five combinations of the operating states of the ON-OFF switches; first switch failure detecting means for checking each of the ON-OFF switches to detect a failure thereof, on the basis of the levels of the first and second signals of each ON-OFF switch and according to the first position judging rule; and second position judging means for determining one of at least the manual forward-shift position, the reverse drive position and the neutral position in which the shift lever is placed, according to a second position judging rule consisting of the five combinations of the operating states of the three or four ON-OFF switches except the one whose failure has been detected by the first switch failure detecting means. The five combinations of the operating states of the ON-OFF switches are determined to prevent the first position judging means from effecting at least an erroneous judgment of a shifting movement of the shift lever to the manual forward-shift position as a shifting movement to the reverse drive position or vice versa, and an erroneous judgment of a shifting movement of the shift lever to the neutral position as a shifting movement to the manual forward-shift position or the reverse drive position, before the first switch failure detecting means detects the failure of one of the ON-OFF switches, which failure would cause the erroneous judgments. The five combinations are further determined to permit the second position judging means to correctly determine the one of at least the manual forward-shift position, the reverse drive position and the neutral position in which the shift lever is placed.

In the shift lever position detecting device constructed according to the third aspect of this invention, the currently established one of the five operating positions of the shift lever is normally detected by the first position judging means on the basis of the signal levels of the three or four ON-OFF switches. Since only the three or four ON-OFF switches are used, the shift lever position detecting device is available at a relatively low cost. In addition, even in the event of a failure of one of the ON-OFF switches, the second position judging means is capable of correctly detecting the currently established one of at least the three positions, namely, the manual forward-shift position, reverse drive position and neutral position "N", on the basis of the signal levels of the normally functioning ON-OFF switches and according to the second position judging rule, so that the transmission can be shifted according to the detected position of the shift lever.

Further, the present shift lever position detecting device is adapted to prevent the first position judging means from effecting the erroneous judgement of the shifting movement of the shift lever to the manual forward-shift position as the shifting movement to the reverse drive position or vice versa, and the erroneous judgement of the shifting movement to the neutral position as the shifting movement to the manual forward-shift position or reverse drive position, before the first switch failure detecting means detects a failure of one of the ON-OFF switches, which failure would cause such erroneous judgments. This arrangement eliminates a risk of a reverse running the vehicle in the direction opposite to the vehicle operator's desired running direction, or an unintended starting of the vehicle, even during a short time period after the occurrence of the failure of one of the ON-OFF switches and before the detection of this failure by the first switch failure detecting means.

The shift lever may have at least one operating position in addition to the five operating positions indicated above. For instance, the shift lever may have an automatic forward-shift position in which the transmission is automatically shifted depending upon running parameters such as an amount of operation of an accelerator pedal (or an amount of opening of a throttle vale or an intake air quantity of an engine) and a running speed of the vehicle.

While the neutral position is required to be located between the manual forward-shift position and the reverse drive position, these three positions need not be located on a straight line such that the manual forward-shift position and the reverse drive position are located on the opposite sides of the neutral position. In other words, these three positions are required to be located such that the shift lever is necessarily moved past the neutral position when it is moved from the manual forward-shift position to the reverse drive position or vice versa.

The transmission may be constructed, for instance, so as to include (a) a two-axes coupling type shifting mechanism having a plurality of shift gear sets which have different gear ratios and each of which consists of two gears mounted on respective parallel two shafts, and a plurality of coupling clutches corresponding to the respective shift gear sets, and (b) a shifting member which is moved by a first actuator member to a selected one of a plurality of first positions, for engagement with a clutch hub sleeve of a corresponding one of the coupling clutches, and is moved by a second actuator member to a selected one of a plurality of second positions, for moving the above-indicated clutch hub sleeve so as to establish a selected one of the operating positions of the transmission. Where the transmission is constructed as described above, an automatic clutch is usually disposed between a drive power source such as an engine and the transmission. In this case, the automatic clutch is released upon shifting of the transmission, to disconnect the transmission from the drive power source. A friction type clutch or an electromagnetic clutch using a magnetic powder is preferably used as the automatic clutch. For example, the friction type clutch includes friction members which are brought into frictional contact with each other under a biasing force of a suitable biasing spring such as a diaphragm spring when the clutch is engaged. When this friction clutch is released, the friction members are separated from each other by a sliding movement of a releasing sleeve by activation of a clutch releasing cylinder.

The transmission may be of any other type such as a planetary gear type, or a continuously variable type modified to provide different speed ratios, as described above with respect to the first aspect of this invention. The present shift lever position detecting device is applicable to an automotive vehicle equipped with an automatic transmission, and a fluid coupling device such as a torque converter disposed between the drive power source and the automatic transmission, or an electric vehicle equipped with an electric motor as the drive power source. Where an engine is used as the drive power source, the throttle valve is operatively connected to an accelerating member such as an accelerator pedal, so that the amount of opening of the throttle valve is controlled depending upon the amount of operation of the accelerating member. However, the throttle valve is controlled by a throttle actuator which is activated according to an electric signal indicative of the amount of operation of the accelerating member.

The first switch failure detecting means may be arranged to determine the presence or absence of a failure of any one of the ON-OFF switches and identify the defective or faulty ON-OFF switch, depending upon whether the combination of the actual levels of the first and second signals of each of the ON-OFF switches meets the corresponding combination according to the first position judging rule, and depending upon whether both of the first and second signals of each ON-OFF switch have the high level or low level.

The second position judging means is preferably arranged to correctly determine the currently established one of all operating positions of the shift lever. However, the second position judging means which becomes operable after a failure of one of the ON-OFF switches has been detected by the first switch failure detecting means may be adapted to determine whether the shift lever is placed in one of the manual forward-shift position, reverse drive position and neutral position. In this case wherein it is not necessary to determine whether the shift lever is moved to the shift-up or shift-down position. the transmission may be placed in a predetermined one of the forward drive positions, for instance, in the first-speed position having the highest speed ratio or the second-speed position having the second highest speed ratio, when the second position judging means determines that the shift lever is placed in the manual forward-shift position. Where the vehicle has a manually operated switch for establishing an automatic shifting mode in which the transmission is automatically shifted, the automatic shifting mode may be established when the second position judging means detects the shift lever currently placed in the manual forward-shift position.

Where the second position judging means is adapted to determine whether the shift lever is to the shift-up or shift-down position even after a failure of one of the ON-OFF switches has been detected by the first switch failure detecting means, the second position judging means may be adapted to ignore any erroneous judgment of the shifting movement of the shift lever which arises from a shifting movement to the shift-up or shift-down position, for instance, an erroneous judgment of the shifting movement from the manual forward-shift position directly to the reverse drive position. It is also possible to ignore an erroneous judgment of the shifting movement of the shift lever which is made after the occurrence of a failure of one of the ON-OFF switches and before the detection of this failure by the first switch failure detecting means, and an erroneous judgment of the shifting movement which is made after the occurrence of a failure of another ON-OFF switch following the failure of the above-indicated one ON-OFF switch and before the detection of the failure of that another ON-OFF switch by second switch failure detecting means which will be described below with respect to one preferred form of this third aspect of the invention.

In one preferred form of the shift lever position detecting device according to the third aspect of the invention described above, wherein the ON-OFF switches consist of four ON-OFF switches, and the shift lever position detecting device further comprises second switch failure detecting means for checking each of the three ON-OFF switches other than the one whose failure has been detected by the first switch failure detecting means, to detect a failure of each of the three ON-OFF switches, on the basis of the levels of the first and second signals of the three ON-OFF switches and according to the second position judging rule. In this form of the invention, the five combinations of the operating states of the four ON-OFF switches are determined to prevent the second position judging means from effecting at least the erroneous judgment of the shifting movement of the shift lever to the manual forward-shift position as the shifting movement to the reverse drive position or vice versa and the erroneous judgment of the shifting movement of the shift lever to the neutral position as the shifting movement to the manual forward-shift position or the reverse drive position, before the second switch failure detecting means detects the failure of one of the three ON-OFF switches, which failure would cause the erroneous judgments, except where the failure of the one of the three ON-OFF switches causes the levels of one and the other of the first and second signals thereof to be held high and low, respectively.

In one advantageous arrangement of the above preferred form of the shift lever position detecting device, the four ON-OFF switches consist of: a first ON-OFF switch whose operating state is switched between the ON and OFF states when the shift lever is moved between one of the shift-up and shift-down positions and any of the other operating positions; a second ON-OFF switch whose operating state is switched between the ON and OFF states when the shift lever is moved between the other of the shift-up and shift-down positions and any one of the other operating positions; a third ON-OFF switch whose operating state is switched between the ON and OFF states when the shift lever is moved between one of the neutral position and the reverse drive position and any one of the other operating positions; and a fourth ON-OFF switch whose operating state is switched between the ON and OFF states when the shift lever is moved between the neutral position and any one of the other operating positions.

In the preferred form of the shift lever position detecting device described above wherein the four ON-OFF switches are provided, the second position judging means is prevented from effecting an erroneous judgement of the shifting movement of the shift lever to the manual forward-shift position as the shifting movement to the rear drive position or vice versa, and an erroneous judgement of the shifting movement to the neutral position as the shifting movement to the manual forward-shift position or reverse drive position, before the second switch failure detecting means detects a failure of another ON-OFF switch, which failure would cause such erroneous judgements, except where the failure of this another ON-OFF switch causes the levels of one and the other of the first and second signals thereof to be held high and low, respectively. This arrangement minimizes the possibility of the above-indicated reverse running or unintended starting of the vehicle, even during a short time period after the occurrence of the failure of the above-indicated another ON-OFF switch and before the detection of this failure by the second switch failure detecting means.

Like the first switch failure detecting means, the second switch failure detecting means may be arranged to determine the presence or absence of a failure of any one of the three ON-OFF switches and identify the defective or faulty ON-OFF switch, depending upon whether the combination of the actual levels of the first and second signals of each of the three ON-OFF switches meets the corresponding combination according to the second position judging rule, and depending upon whether both of the first and second signals of each ON-OFF switch have the high level or low level. However, the second switch failure detecting means need not be adapted to identify the faulty ON-OFF switch.

In the event of detection of a failure of one of the thee ON-OFF switches by the second switch failure detecting means, it is almost impossible to correctly determine the currently established one of the five operating positions of the shift lever, it is desirable to ignore the determination of the currently established operating position of the shift lever on the basis of the signals of the ON-OFF switches, and place the transmission in the power cut-off position for stopping the vehicle as soon as possible.

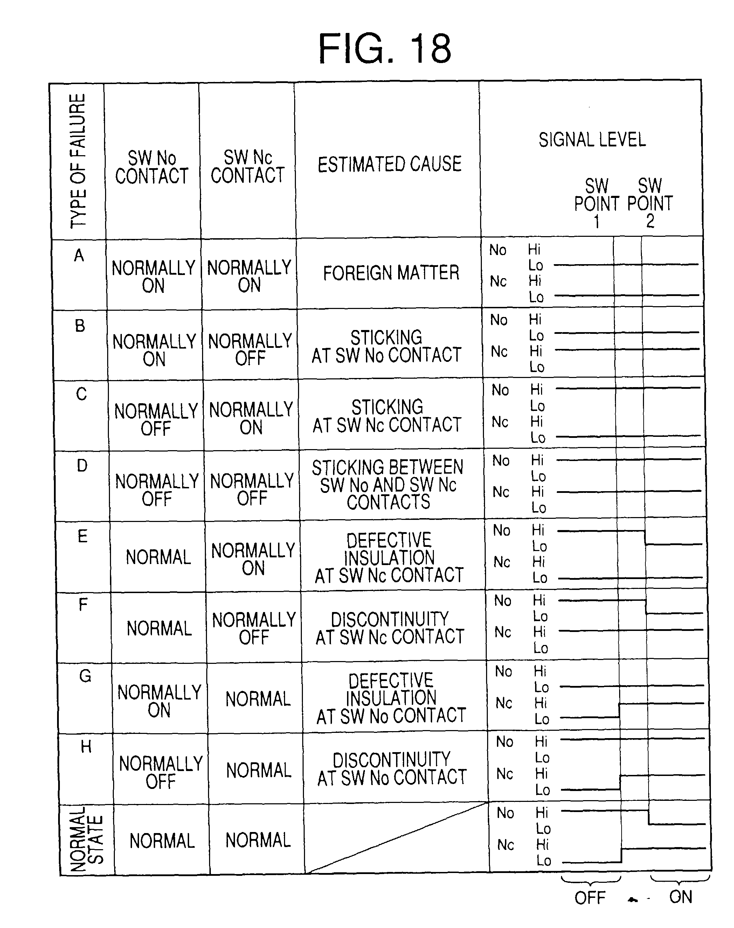

In the preferred form of the shift lever position device described above, the second position judging means is prevented from effecting the erroneous judgement of the shifting movement of the shift lever to the manual forward-shift position as the shifting movement to the rear drive position or vice versa, and the erroneous judgement of the shifting movement to the neutral position as the shifting movement to the manual forward-shift position or reverse drive position, before the second switch failure detecting means detects the failure of another ON-OFF switch, except where the failure of this another ON-OFF switch causes the levels of one and the other of the first and second signals thereof to be held high and low, respectively, that is, except where the failure is the type B or C failure indicated in Fig. 18. If possible, however, the above-indicated erroneous judgements may be prevented for all types of failure of the ON-OFF switches, namely, for all of the failure types A through H of Fig. 18, which include the types B and C which cause the first and second signals to be held respectively high and low or vice versa.

In a second preferred form of the third aspect of this invention, the shift lever is supported such that the shift lever is shifted from the manual forward-shift position to the neutral position by a first movement thereof from the manual forward-drive position to a firs turning point in a first direction and at least a second movement thereof from the first turning point in a second direction which intersects the first direction so as to prevent the second movement of the shift lever even when a force acts on the shift lever in a direction substantially parallel to the first direction so that the transmission is held in the currently established forward drive position while the shift lever is located at the first turning point or between the manual forward-drive position and the first turning point, the shift lever being biased from the first turning point toward the manual forward-shift position.

### BRIEF DESCRIPTION OF THE DRAWINGS

Fig. 1 is a schematic view showing a part of a vehicle drive system according to one embodiment of this invention, which includes a transmission and a differential gear device;
Fig. 2 is an elevational view in cross section of the transmission and the differential gear device of the vehicle drive system of Fig. 1;
Fig. 3 is a view showing an example of an automatic clutch provided in the vehicle drive system of Fig. 1;
Fig. 4 is a diagram showing a hydraulic circuit for operating a clutch releasing cylinder for engaging and releasing the automatic clutch of Fig. 3;
Figs. 5A-5D are views showing coupling clutches provided in the transmission of the vehicle drive system of Fig. 1;
Fig. 6 is a block diagram showing a control device for the vehicle drive system of Fig. 1;
Fig. 7A is a perspective view of a shift lever device including a shift lever used in the vehicle drive system of Fig. 1;
Fig. 7B is a view schematically illustrating an arrangement of the shift lever device adapted to support the shift lever such that the shift lever is shiftable from a manual forward-shift position to a neutral position and a reverse drive position along a predetermined path;
Figs. 8A through 8H are views schematically illustrating shift lever devices used in second through ninth embodiments of this invention, respectively.
Fig. 9 is a block diagram corresponding to that of Fig. 6, showing a control device of a vehicle drive system according to a tenth embodiment of this invention;
Fig. 10A is a perspective view of a shift lever including a shift lever, which is used in the vehicle drive system according to the tenth embodiment of Fig. 9;
Fig. 10B is a view schematically illustrating an arrangement of the shift lever device used in the tenth embodiment;
Fig. 11 is a view showing four ON-OFF switches SW1-SW4 of a shift lever position detecting device arranged to detect the operating positions of the shift lever of Figs. 10A and 10B;
Fig. 12 is a view showing an arrangement for switching actions of the ON-OFF switches SW1-SW4;
Figs. 13A is a view showing one form of switching action of each of the ON-OFF switches SW1-SW4 ;
Fig. 13B is a view showing another form of switching action of each of the ON-OFF switches SW1-SW4;
Fig. 14 is a block diagram illustrating functional means incorporated in an electronic transmission control unit provided in the control device of Fig. 9;
Fig. 15 is a flow chart illustrating a position detecting routine executed by the functional means of Fig. 14 for detecting a currently established position of the shift lever;
Fig. 16 is a view indicating a first position judging rule used by normal-state position judging means shown in Fig. 14, for detecting the shift lever position;
Figs. 17A-17D are views indicating a second position judging rule used by defective-state position judging means shown in Fig. 14, for detecting the shift lever position;
Fig. 18 is a view indicating various types of failure of the ON-OFF switches;
Fig. 19 is a view indicating judgments of the different types of failures made by first switch failure detecting means shown in Fig. 14 in the event of a failure of the first ON-OFF switch SW1;
Fig. 20 is a view indicating judgments of the different types of failures made by the first switch failure detecting means in the event of a failure of the second ON-OFF switch SW2;
Fig. 21 is a view indicating judgments of the different types of failures made by the first switch failure detecting means in the event of a failure of the third ON-OFF switch SW3;
Fig. 22 is a view indicating judgments of the different types of failures made by the first switching failure detecting means in the event of a failure of the fourth ON-OFF switch SW4;
Fig. 23 is a view indicating judgements of the different types of failures made by second switch failure detecting means shown in Fig. 14 in the event of a failure of the second ON-OFF switch SW2 following the first ON-OFF switch SW1;
Fig. 24 is a view indicating judgements of the different types of failures made by the second switch failure detecting means in the event of a failure of the second ON-OFF switch SW3 following the first ON-OFF switch SW1;
Fig. 25 is a view indicating judgements of the different types of failures made by the second switch failure detecting means in the event of a failure of the second ON-OFF switch SW4 following the first ON-OFF switch SW1;
Fig. 26 is a view indicating judgements of the different types of failures made by the second switch failure detecting means in the event of a failure of the second ON-OFF switch SW1 following the first ON-OFF switch SW2;
Fig. 27 is a view indicating judgements of the different types of failures made by the second switch failure detecting means in the event of a failure of the second ON-OFF switch SW3 following the first ON-OFF switch SW2;
Fig. 28 is a view indicating judgements of the different types of failures made by the second switch failure detecting means in the event of a failure of the second ON-OFF switch SW4 following the first ON-OFF switch SW2;
Fig. 29 is a view indicating judgements of the different types of failures made by the second switch failure detecting means in the event of a failure of the second ON-OFF switch SW1 following the first ON-OFF switch SW3;
Fig. 30 is a view indicating judgements of the different types of failures made by the second switch failure detecting means in the event of a failure of the second ON-OFF switch SW2 following the first ON-OFF switch SW3;
Fig. 31 is a view indicating judgements of the different types of failures made by the second switch failure detecting means in the event of a failure of the second ON-OFF switch SW4 following the first ON-OFF switch SW3;
Fig. 32 is a view indicating judgements of the different types of failures made by the second switch failure detecting means in the event of a failure of the second ON-OFF switch SW1 following the first ON-OFF switch SW4;
Fig. 33 is a view indicating judgements of the different types of failures made by the second switch failure detecting means in the event of a failure of the second ON-OFF switch SW2 following the first ON-OFF switch SW4;
Fig. 34 is a view indicating judgements of the different types of failures made by the second switch failure detecting means in the event of a failure of the second ON-OFF switch SW3 following the first ON-OFF switch SW4;
Figs. 35A-35C are views indicating different shift patterns of the shift levers used in eleventh, twelfth and thirteenth embodiments of the invention; and
Fig. 36 is a view corresponding to that of Fig. 16, indicating signal states of three ON-OFF switches used to detect the shift lever position according to a fourteenth embodiment of this invention.

### DETAILED DESCRIPTION OF THE PREFERRED EMBODIMENTS

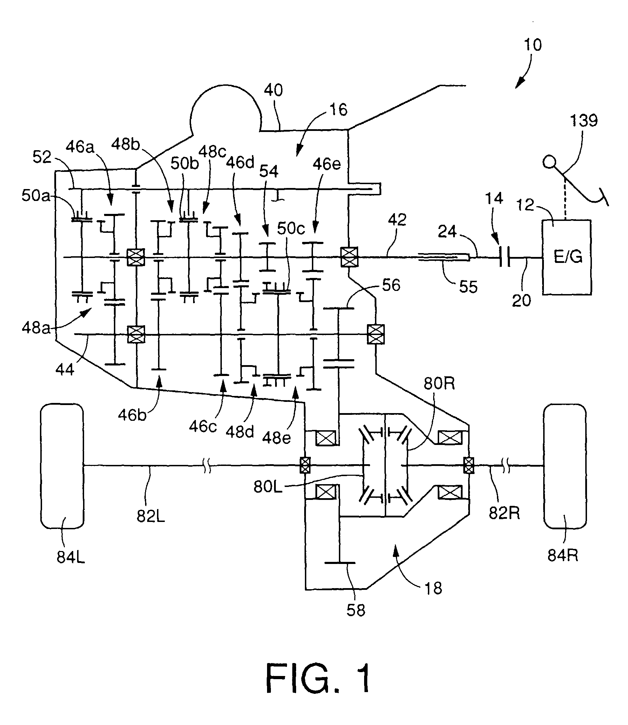

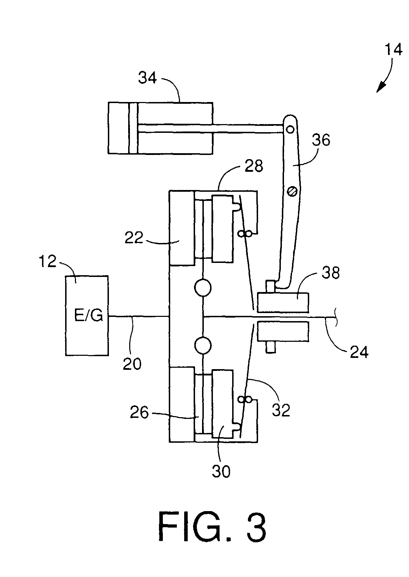

Referring first to Fig. 1, there is schematically shown a drive system 10 of an FF (front-engine front-drive) automotive vehicle. This vehicle drive system 10 includes a drive power source in the form of an engine 12, an automatic clutch 14, a transmission 16 and a differential gear device 18. The automatic clutch 14, which is a dry single-disc type friction clutch as shown in Fig. 3, includes: a flywheel 22 attached to a crankshaft 20 of the engine; an output shaft 24; a clutch disc 26 fixed to the output shaft 24; a clutch housing 28; a pressure plate 30 fixed to the clutch housing 28; a diaphragm spring 32 for biasing the pressure plate 30 toward the flywheel 22, to force the pressure plate 30 against the clutch disc 26, for thereby transmitting a drive force from the crankshaft 20 to the output shaft 24; a clutch releasing cylinder 34; a releasing arm 36 connected to a piston rod of the clutch releasing cylinder 34; and a releasing sleeve 38 operated by the clutch releasing cylinder 34 through the releasing arm 36, to move the radially inner portion of the diaphragm spring 32 in the left direction as seen in Fig. 3, for placing the automatic clutch 14 in the released position.

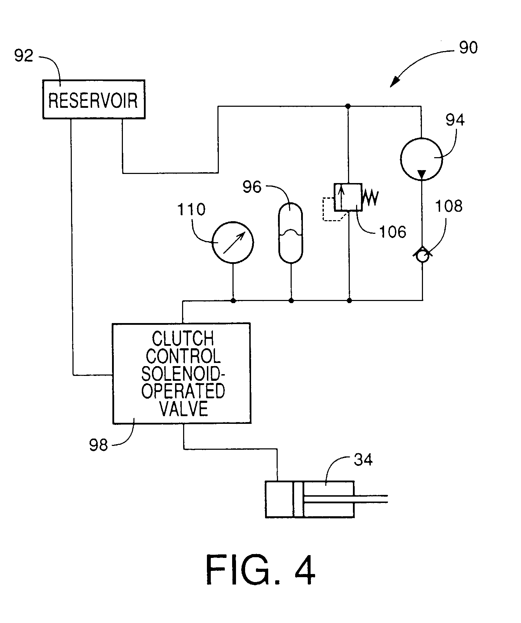

As shown in Fig. 4, the clutch releasing cylinder 34 is connected to a hydraulic circuit 90 which includes a reservoir 92, an electrically operated hydraulic pump 94 for pressurizing a working fluid supplied from the reservoir 92, an accumulator 96 for storing the pressurized fluid delivered from the hydraulic pump 94, and a clutch control solenoid-operated valve 98 for regulating flows of the pressurized fluid to and from the clutch releasing cylinder 34. When the pressurized fluid is supplied from the valve 98 to the cylinder 34, the automatic clutch 14 is released. When the valve 98 permits the pressurized fluid to be discharged from the cylinder 34, the piston of the cylinder 34 is moved back by the biasing force of the diaphragm spring 32 of the automatic clutch 14, whereby the automatic clutch 14 is engaged. The engaging torque of the automatic clutch 14 can be continuously controlled by controlling the piston stroke Sct of the clutch releasing cylinder 34. Reference numerals 106, 108 and 110 in Fig. 4 respectively designate a pressure relief valve, a check valve 108, and a hydraulic pressure sensor for detecting the pressure Po of the pressurized fluid in the hydraulic circuit 90.

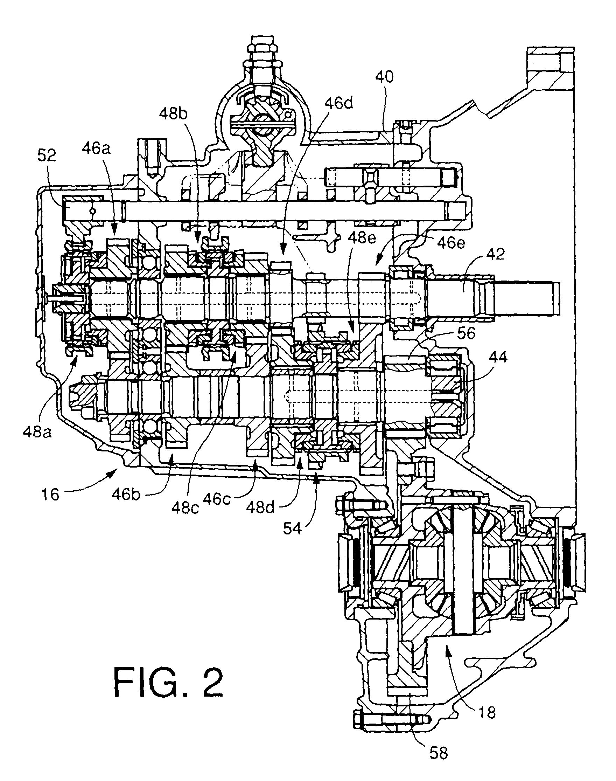

Referring back to Fig. 1, the transmission 16 is disposed within a housing 40, together with the differential gear device 18, as shown in detail in Fig. 2, so that the transmission 16 and the differential gear device 18 constitute a transaxle unit. The transmission 18 and the differential gear unit 18 are lubricated by a bath of an oil in the housing 40. The transmission 16 includes: (a) a shifting mechanism of two-axes type including an input shaft 42, an output shaft 44 parallel to the input shaft 42, five sets of shift gears 46a-46e, and five coupling clutches 48a-48e corresponding to the respective shift gear sets 46a-46e; and (b) a shift selector shaft 52 for selectively shifting three clutch hub sleeves 50a, 50b and 50c of the coupling clutches 48a-48e, to selectively place the transmission 16 in one of five forward drive positions, as described below in detail. The five sets of shift gears 46a-46e each set consisting of a gear mounted on the input shaft 42 and a gear mounted on the output shaft 44 have respective different gear ratios.

The transmission 16 further includes a set of rear drive shift gears 54 consisting of two gears mounted on the respective input and output shafts 42, 44. The gear of this rear drive shift gear set 54 which is mounted on the output shaft 44 is held in mesh with a rear drive idler gear on a countershaft, as well known in the art, for establishing a rear drive position of the transmission 16. The input shaft 42 is connected to the output shaft 24 of the automatic clutch 14 through a spline connection 55, and the output shaft 44 has an output gear 56 which meshes with a ring gear 58 of the differential gear device 18. It is noted that Figs. 1 and 2 are development views in which the axes of the input and output shafts 42, 44 and the axis of the ring gear 58 which do not actually lie in the same plane are shown so as to lie in the same plane.

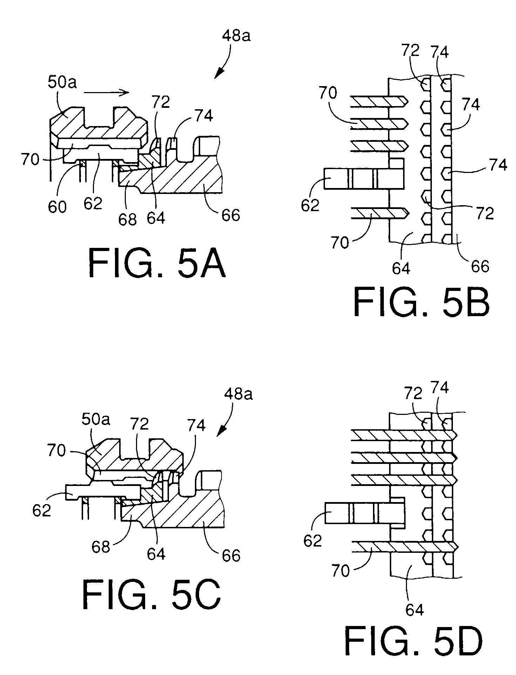

Each of the coupling clutches 49a-48e is of synchro-mesh type. The synchro-mesh coupling clutch 48a is shown in Figs. 5A-5D, by way of example. As shown in these figures, the synchro-mesh coupling clutch 48a includes: a key spring 60; a shifting key 62 which is held in engagement with the corresponding clutch hub sleeve 50a; a synchronizer ring 64 which is rotated with the shifting key 62 with a predetermined amount of play therebetween; and a coned portion 68 of an input gear 66 of the shift gear set 46a. The clutch hub sleeve 50a has spline teeth 70 formed on its inner circumferential surface, and is splined to the input shaft 42, so that the sleeve 50a is rotated with the input shaft 42. When the clutch hub sleeve 50a is axially moved in the right direction as seen in Figs. 5A and 5C, the synchronizer ring 64 is brought into pressing contact with the coned portion 68 of the input gear 66 via the shifting key 62, so that a power is transmitted by friction between the input gear 66 and the synchronizer ring 64. A further movement of the clutch hub sleeve 50a in the right direction will cause engagement of its spline teeth 70 with spline teeth 72 formed on the synchronizer ring 64 and spline teeth 74 formed on the input gear 66, so that the input shaft 42 and the input gear 66 are rotated as a unit, whereby the power is transmitted between the input and output shafts 42, 44 through the shift gear set 46a. Figs. 5A and 5B show the coupling clutch 48a in its released state, while Figs. 5C and 5D show the coupling clutch 48a in its engaged state. Figs. 5A and 5C are cross sectional views taken in a plane including the axes of the relevant components, while Figs. 5B and 5D are development views of the coupling clutch 48a taken in the radially inward direction, with the cylindrical portion of the clutch hub sleeve 50a being removed.

The other coupling clutches 48b-48e are substantially identical in construction with the coupling clutch 48a. The clutch hub sleeve 50a is provided for operative association with the coupling clutch 48a, and the clutch hub sleeve 50b is commonly used for operative association with the coupling clutches 48b and 48c, while the clutch hub sleeve 50c is commonly used for operative association with the coupling clutches 48d and 48e.

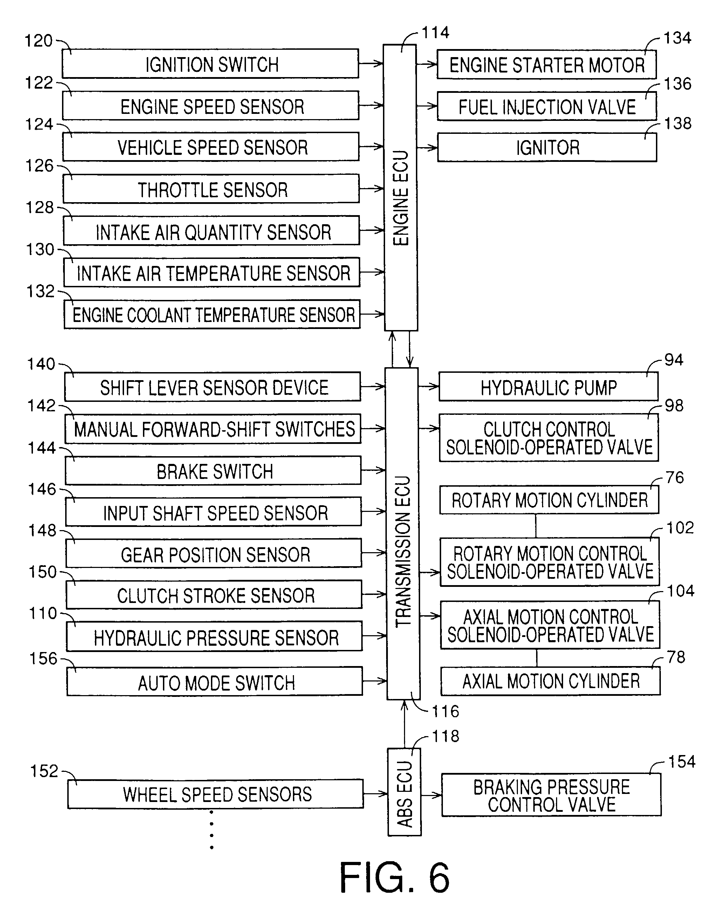

The shift selector shaft 52 is supported rotatably about its axis and movably in its axial direction. That is, the shift selector shaft 52 is rotatable by a rotary motion cylinder 76 (Fig. 6) to a selected one of three rotary positions, namely, a first rotary position for engagement with the clutch hub sleeve 50c, a second rotary position for engagement with the clutch hub sleeve 50b, and a third rotary position for engagement with the clutch hub sleeve 50c. Further, the shift selector shaft 52 is axially movable by an axial motion cylinder 78 (Fig. 6) to a selected one of three axial positions, namely, an intermediate neutral position (first axial position) in which the coupling clutches 48a-48e are all placed in their released positions while the rear drive position is not established, and a second and a third axial position which are respectively located on the right and left sides of the neutral or first axial position, as seen in Fig. 1. In the neutral position, the transmission 16 is placed in a power cut-off position in which the transmission of a drive force between the input and output shafts 42, 44 is cut off.

When the shift selector shaft 52 is placed in the first rotary position and the second axial position, the coupling clutch 48e is engaged, so that the transmission 16 is placed in a first-speed forward drive position in which a speed ratio "e" of the transmission 16 is the highest. The speed ratio "e" is represented by N_{IN}/N_{OUT}, where N_{IN} is the rotating speed of the input shaft 42, while N_{OUT} is the rotating speed of the output shaft 44. When the shift selector shaft 52 is placed in the first rotary position and the third axial position, the coupling clutch 48d is engaged, so that the transmission 16 is placed in a second-speed forward drive position having the second highest speed ratio "e". When the shift selector shaft 52 is placed in the second rotary position and the second axial position, the coupling clutch 48c is engaged, so that the transmission 16 is placed in a third-speed forward drive position having the third highest speed ratio "e". When the shift selector shaft 52 is placed in the second rotary position and the third axial position, the coupling clutch 48b is engaged, so that the transmission 16 is placed in a fourth-speed forward drive position having the fourth highest speed ratio "e", which is substantially equal to "1". When the shift selector shaft 52 is placed in the third rotary position and the second axial position, the coupling clutch 48a is engaged, so that the transmission 16 is placed in the fifth-speed forward drive position having the lowest speed ratio "e". When the shift selector shaft 52 is placed in the third rotary position and the third axial position, the transmission 16 is placed in the rear drive position. It will be understood that the rotary and axial motion cylinders 76, 78 for rotating and axially moving the shift selector shaft 52 cooperate to function as a shifting actuator device for selectively establishing one of the operating positions of the transmission 16. These cylinders 76, 78 are connected to the hydraulic circuit to which the clutch releasing cylinder 34 is connected as described above. The operating states and speeds of the cylinders 76, 78 are controlled by regulating the pressure Po of the fluid pressurized by the hydraulic pump 94, and by controlling a rotary motion control solenoid-operated valve 102 and an axial motion control solenoid-operated valve 104, which are shown in Fig. 6.

It will also be understood that the shift selector shaft 52 functions as a shifting member which is rotated by a rotary motion actuator in the form of the rotary motion cylinder 76 and axially moved by an axial motion actuator in the form of the axial motion cylinder 78, for shifting the transmission 16.

The differential gear device 18 is of a bevel gear type, including a pair of side gears 80R, 80L which are splined to respective drive shafts 82R, 82L for rotating front wheels 84R, 84L, which are drive wheels of the vehicle.

Referring to the block diagram of Fig. 6, there is shown a control device for the vehicle drive system 10. The control device includes an electronic engine control unit 114 (hereinafter referred to as "engine ECU 114"), an electronic transmission control unit 116 (hereinafter referred to as "transmission ECU 116"), and an electronic anti-lock brake control unit 118 (hereinafter referred to as "ABS ECU 118"). These engine ECU 114, transmission ECU 116 and ABS ECU 118 are interconnected to each other for mutual data communication. Each of the ECUs 114, 116, 118 includes a microcomputer incorporating a random-access memory (RAM) and a read-only memory (ROM) and capable of performing signal processing operations according to control programs stored in the ROM while utilizing a temporary data storage function of the RAM.

The engine ECU 114 is adapted to receive output signals of various sensors and switches such as: an ignition switch 120; an engine speed sensor 122 whose output signal indicates an operating speed N_{E} of the engine 12; a vehicle speed sensor 124 whose output signal indicates a running speed V of the vehicle; a throttle sensor 126 whose output signal indicates an opening angle θ_{TH} of a throttle valve of the engine 12; an intake air quantity sensor 128 whose output signal indicates an intake air quantity Q of the engine 12; an intake air temperature sensor 130 whose output signal indicates a temperature T_{A} of the intake air of the engine 12; and an engine coolant temperature sensor 132 whose output signal indicates a temperature T_{W} of a coolant water of the engine 12. Based on the output signals of these switch and sensors indicated above, the engine ECU 114 controls an engine starter motor 134 for starting the engine 12, a fuel injection valve 136 for injecting a fuel into the engine 12, and an ignitor 138 for controlling an ignition timing of each spark plug of the engine 12. By controlling the fuel injection valve 136, the injection amount and timing of the fuel are controlled. The ignition switch 120 has an OFF position, an ON position and a START position. When the ignition switch 120 is turned to the START position, the engine ECU 114 activates the engine starter motor 134 to start the engine 12.

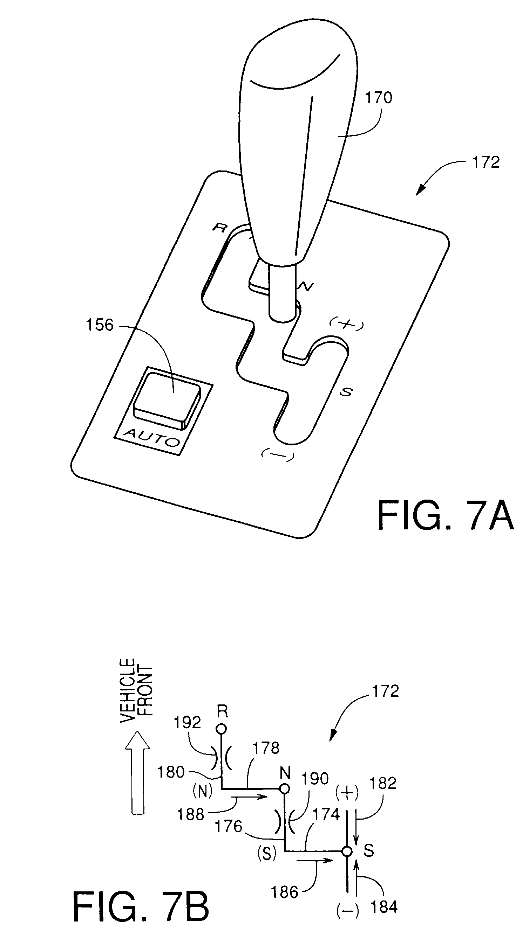

The transmission ECU 116 is adapted to receive output signals of various switches and sensors such as: a shift lever sensor device 140 whose output signals indicate a currently established one of operating positions "S", "N" and "R" of a shift lever 170 (Fig. 7A); manual forward-shift switches 142 whose output signals indicate whether the shift lever 170 is placed in a shift-up or shift-down position; a brake switch 144 whose output signal indicates whether a braking system of the vehicle is in operation; an input shaft speed sensor 146 whose output signal indicates the rotating speed N_{IN} of the input shaft 42 of the transmission 15; a gear position sensor 148 whose output signals indicate a currently established one of the operating positions P_{G} of the transmission 16; a clutch stroke sensor 150 whose output signal indicates an operating stroke S_{CL} of the automatic clutch 14 (operating stroke of the clutch releasing cylinder 34); a hydraulic pressure sensor 110 whose output signal indicates the hydraulic pressure Po in the hydraulic circuit indicated above; and an AUTO MODE switch 156 whose output signal indicates whether the vehicle drive system 10 is in a state in which an automatic shifting mode is available. Based on the output signals of the switches and sensors indicated above and the signals received from the engine ECU 114 and ABS ECU 118, the transmission ECU 116 controls the hydraulic pump 94, the clutch control solenoid-operated valve, the rotary motion control solenoid-operated valve 102 and the axial motion control solenoid-operated valve 104, for controlling the controlling the rotary and axial motion cylinders 76, 78 so as to control shifting operations of the transmission 16 (including an operation to establish the rear drive position), and for controlling the clutch releasing cylinder 34 so as to control the automatic clutch 34 upon shifting of the transmission 16.

The shift lever 170 is located on one side of a vehicle operator's seat, and has five operating positions, namely, a reverse drive position "R", a neutral position "N", a manual forward-shift position "S", a shift-up position "(+)" and a shift-down position "(-)", as indicated in Figs. 7A and 7B. The shift lever 170 is supported by a shift lever device 172 such that the shift lever 170 is shiftable to a selected one of the operating positions. The operating positions "R", "N" and "S" of the shift lever 170 are detected by the shift lever sensor device 140 indicated above, which consists of a plurality of slide switches or ON-OFF switches that are disposed so as to detect the motion and the currently established operating position of the shift lever 170. When the shift lever 170 is moved to the reverse drive position "R", the transmission 16 is placed in the rear drive position. When the shift lever 170 is moved to the neutral position "N", the transmission 16 is placed in the power cut-off position. The shift-up and shift-down positions "(+)" and "(-)" are provided on the opposite sides of the manual forward-shift position "S" such that the shift-up, shift-down and manual forward-shift positions "(+)", "S" and "(-)" are spaced from each other in the longitudinal or running direction of the vehicle. When the shift lever 170 is moved from the manual forward-shift position "S" to the shift-up position "(+)", the transmission 16 is shifted up from the currently established forward drive position to the forward drive position whose speed ratio "e" is one step lower than that of the currently established position. When the shift lever 170 is moved from the manual forward-shift position "S" to the shift-down position "(-)", the transmission 16 is shifted down from the currently established forward drive position whose speed ratio "e" is one step higher than that of the currently established position. However, the transmission 16 may be shifted up or down to the forward drive position whose speed ratio "e" is two steps higher or lower than that of the currently established position, when the shift lever 170 is held in the shift-up or shift-down position for more than predetermined length of time. The shift-up and shift-down positions "(+)" and "(-)" are detected by the manual forward-shift switches 142, which may be a pair of automatic-return ON-OFF switches. The shift lever sensor device 140 may be adapted to also detect the shift-up and shift-down positions "(+)" and "(-)" as well as the positions "R", "N" and "S".

The automatic shifting mode indicated above is established when the shift lever 170 is placed in the manual forward-shift position "S" while the AUTO MODE switch 156 is placed in the ON position (depressed position). In the automatic shifting mode, the transmission 16 is automatically controlled, that is, automatically placed in one of the five forward drive positions, depending upon the vehicle running parameters such as the opening angle θ_{TH} of the throttle valve and the running speed V, and according to predetermined shift patterns which are relationships between each forward drive position and the vehicle running parameters (e.g., θ_{TH} and V). The AUTO MODE switch 156, which is an automatic-return switch, is disposed near near the shift lever 170 and is partially accommodated within the housing of the shift lever device 172, as shown in Fig. 7A. When the AUTO MODE switch 156 which has been turned ON is operated (depressed) again, this switch 156 is turned OFF, and the automatic shifting mode is cancelled. Alternatively, the automatic shifting mode is cancelled by operating the shift lever 170 from the manual forward-shift position "S" to the other operating position "(+)", "(-)", "N" or "R".

As shown in Fig. 6, the ABS ECU 118 is adapted to receive output signals of wheel speed sensors 152 which indicate rotating speeds N_{W} of the four vehicle wheels. Based on the detected wheel speeds N_{W} and the vehicle running speed V received from the engine ECU 114, the ABS ECU 118 calculates an amount of slip of each wheel, and controls a braking pressure control valve device 154 to regulate the braking pressure for each wheel so as to prevent an excessive amount of slip of each wheel during brake application to the vehicle.

The shift lever device 172, which is schematically illustrated in Fig. 7B, supports and guide the shift lever 170 such that the shift lever 170 is movable in a two-dimensional plane. In Fig. 7B, solid lines represent a movement path along which the shift lever 170 can be moved from one of its operating positions to another. As indicated above, the shift lever 170 can be shifted from the manual forward-shift position "S" to the shift-up and shift-down positions "(+)" and "(-)", in a shifting direction parallel to the vehicle running direction. The movement path of the shift lever 170 includes: a first straight segment 174 extending in the lateral or width direction of the vehicle (which is perpendicular to the longitudinal or running direction) between the manual forward-shift position "S" and a first turning point "(S)"; a second straight segment 176 extending in the vehicle running direction between the first turning point (S) and the neutral position "N"; a third straight segment 178 extending in the lateral direction of the vehicle between the neutral position "N" and a second turning point "(N)"; and a fourth straight segment 180 extending in the vehicle running direction between the second turning point "N" and the reverse drive position "R". The first turning point "(S)" is located to the left of the manual forward-shift position "S" which is located nearest to the vehicle operator's seat. The second turning point "(N)" is located to the left of the neutral position "N". The neutral position "N" and the second turning point "(N)" are located frontwards of the manual forward-shift position "S" and the first turning point "(S)", and the reverse drive position "R" is located frontwards of the neutral position "N" and the second turning point "(N)".

The first and second straight segments 174 and 176 intersect each other at right angles at the first turning point "(S)", while the third and fourth straight segments 178, 180 intersect each other at right angles at the second turning point "(N)". These turning points "(S)" and "(N)" and the shift-up and shift-down positions "(+)" and "(-)" of the shift lever 170, that is, the points and positions indicated in Fig. 7B by the respective characters within the brackets, are referred to as unstable positions, as distinguished from the stable positions "S", "N" and "R". Described more specifically, the shift lever device 172 includes: a biasing device 182 for biasing the shift lever 170 for automatically returning it from the shift-up position "(+)" back to the manual forward-shift position "S"; a biasing device 184 for biasing the shift lever 170 for automatically returning it from the shift-down position "(-)" back to the manual forward-shift position "S"; a biasing device 186 for biasing the shift lever 170 for automatically returning it from the first turning point "(S)" back to the manual forward-shift position "S"; and a biasing device 188 for biasing the shift lever 170 for automatically returning it from the second turning point "(N)" back to the neutral position "N". These biasing devices 182, 184, 186, 188 may include suitable springs.

The shift lever 170 may be operated to the shift-up and shift-down positions "(+)" and "(-)" either by translation of the shift lever 170 in the above-indicated two-dimensional plane, or by pivoting movements of the shift lever 170 about its lower end portion with its upper end portion being moved frontwards and rearwards.

The shift lever sensor device 140 is arranged such that its output signals remain in the same states even when the shift lever 170 is moved along the first straight segment 174 from the manual forward-shift position "S" to the first turning point "(S)", so that the rotary and axial motion control valves 102, 104 remain in the same states, thereby holding the transmission 16 in the currently established forward drive position. In other words, the shift lever sensor device 140 and the control valves 102, 104 cooperate with the transmission ECU 116 to constitute position holding means which is operatively associated with the shifting actuator device 76, 78 such that the transmission is held in the currently established forward drive position even when the shift lever 170 has been moved to the first turning point "(S)". This position holding means also holds the transmission 16 in the neutral position "N" even when the shift lever 170 has been moved along the third straight segment 178 from the neutral position "N" to the second turning point "(N)". That is, the output signals of the shift lever sensor device 140 remain in the same states even when the shift lever 170 has been moved to the second turning point "(N)".

As also schematically indicated in Fig. 7B, the shift lever device 172 further includes a first resisting mechanism 190 disposed between the first turning point "(S)" and the neutral position "N", and a second resisting mechanism 192 disposed between the second turning point "(N)" and the reverse drive position "R". The resisting mechanism 190 gives a resistance to the movements of the shift lever 170 between the first turning point "(S)" and the manual forward-shift position "S", while the resisting mechanism 190 gives a resistance to the movements of the shift lever 170 between the second turning point "(N)" and the neutral position "N". The resistance given by each of these resisting mechanism 190, 192 has a peak value when the shift lever 170 is located intermediate between the turning point "(S)" or "(N)" and the manual forward-shift position "S" or neutral position "N". The resisting mechanisms 190, 192 may include a spring or other suitable biasing device and a cam. To move the shift lever from the first turning point "(S)" to the neutral position "N" or vice versa, or from the second turning point "(N)" to the reverse drive position "R" or vice versa, the force acting on the shift lever 170 should overcome the resistance force generated by the resisting mechanism 190, 192.

It will be understood from the above description that the shift lever 170 is shifted from the manual forward-shift position "S" to the neutral position "N" by a first movement thereof along the first straight segment 174 from the manual forward-shift position "S" to the first turning point "(S)" in a first direction (left direction), and a second movement thereof along the second straight segment 176 from the first turning point "(S)" to the neutral position "N" in a second direction (frontward direction) perpendicular to the first direction. It will also be understood that the shift lever 170 is shifted from the neutral position "N" to the reverse drive position "R" by a third movement thereof along the third straight segment 178 from the neutral position "N" to the second turning point "(N)" in a third direction (left direction), and a fourth movement thereof along the fourth straight segment 180 from the second turning point "(N)" to the reverse drive position "R" in a fourth direction (frontward direction) perpendicular to the third direction. The first and second directions are perpendicular to each other, while the third and fourth directions are perpendicular to each other. The first and third directions are parallel to the lateral or width direction of the vehicle, while the second and fourth directions are parallel to the longitudinal or running direction of the vehicle.

Since there exists the first turning point "(S)" of 90° between the forward-shift position "S" and the neutral position "N" and since the shift lever 170 is biased in the direction from the first turning point "(S)" toward the manual forward-shift position "S", the shift lever 170 is prevented from being shifted from the manual forward-shift position "S" to the neutral position "N" even if the shift lever 170 is moved leftwards along the first straight segment 174 from the manual forward-shift position "S" to the first turning point "(S)" by unintentional hitting of the operator's left knee against the shift lever 170 during forward running of the vehicle with the shift lever 170 placed in the manual forward-shift position "S". The hitting of the operator's knee against the shift lever 170 merely results in the first movement of the shift lever 170 from the manual forward-shift position "S" to the first turning point "(S)", but does not permit the shift lever 170 to be shifted to the neutral position "N" in which the transmission 16 is placed in the power cut-off position. Thus, the present shift lever device 172 is effective to prevent the transmission 16 from being erroneously shifted to the power cut-off position even in the event of the movement of the shift lever 170 from the manual forward-shift position "S" to the first turning point "(S)" in the absence of an intention of the vehicle operator to shift the shift lever 170 to the neutral position "N". It is also noted that the resisting mechanism 190 disposed between the first turning point "(S)" and the neutral position "N" is also effective to prevent the erroneous or unintended movement of the shift lever 170 from the manual forward-shift position "S" to the neutral position "N", owing to the movement resistance given by the resisting mechanism 190. This resisting mechanism 190 is also effective to prevent an unintentional movement of the shift lever 170 from the neutral position "N" to the manual forward-shift position "S".

Since the transmission 16 is held in the currently established forward drive position even when the shift lever 170 has been unintentionally moved from the manual forward-shift position "S" to the first turning point "(S)", this unintentional movement of the shift lever 170 does not cause a change in the forward running condition of the vehicle, namely, does not cause a shifting of the transmission 16 to the power cut-off position.

Since there exists the second turning point "(N)" of 90° between the neutral position "N" and the reverse drive position "R" and since the shift lever 170 is biased in the direction from the second turning point "(S)" toward the neutral position "N", the shift lever 170 is prevented from being shifted from the neutral position "N" to the reverse drive position "R" even if the shift lever 170 is moved leftwards along the third straight segment 178 from the neutral position "N" to the second turning point "(N)" by unintentional hitting of the operator's left knee against the shift lever 170 while the shift lever 170 is placed in the neutral position "N". The hitting of the operator's knee against the shift lever 170 merely results in the third movement of the shift lever 170 from the neutral position "N" to the second turning point "(N)", but does not permit the shift lever 170 to be shifted to the reverse drive position "R" in which the transmission 16 is placed in the rear drive position. Thus, the present shift lever device 172 is effective to prevent the transmission 16 from being erroneously shifted to the rear drive position even in the event of the movement of the shift lever 170 from the neutral position "N" to the second turning point "(N)" in the absence of an intention of the vehicle operator to shift the shift lever 170 to the reverse drive position "R". It is also noted that the resisting mechanism 192 disposed between the second turning point "(N)" and the reverse drive position "R" is also effective to prevent the erroneous or unintended movement of the shift lever 170 from the neutral position "N" to the reverse drive position "R", owing to the movement resistance given by the resisting mechanism 192. This resisting mechanism 192 is also effective to prevent an unintentional movement of the shift lever 170 from the reverse drive position "R" to the neutral position position "N".

Since the transmission 16 is held in the power cut-off position even when the shift lever 170 has been unintentionally moved from the neutral position "N" to the second turning point "(N)", this unintentional movement of the shift lever 170 does not cause a change in the operating condition of the transmission 16, namely, does not cause a shifting of the transmission 16 to the rear drive position.

The shift lever device 172 according to the first embodiment may be modified as needed. For instance, the shift lever device 172 may be modified such that the reverse drive position "R" is located at one end of the second straight segment 176 which is remote from the first turning point "(S)", while the neutral position "N" is located at one end of the fourth straight segment 180 which is remote from the second turning point.

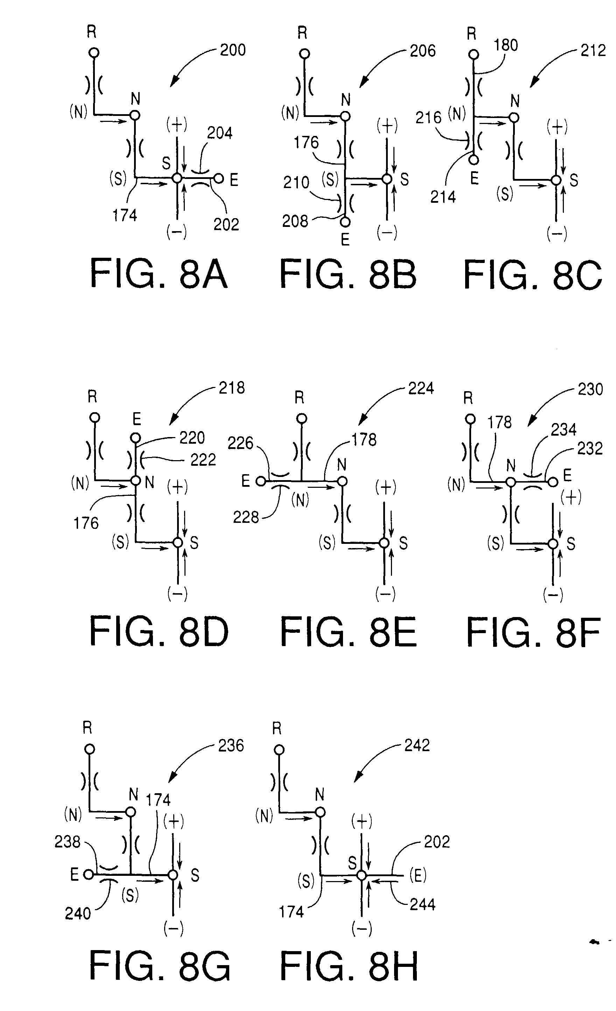

Referring to Figs. 8A through 8H, there will be described shift lever devices constructed according to second through ninth embodiments of this invention in which the same reference characters as used in the first embodiment will be used to identify the functionally corresponding elements.

The shift lever device 200 shown in Fig. 8A is adapted to support the shift lever 170 such that the shift lever is also shiftable from the manual forward-shift position "S" to an automatic forward-shift position "E" along a straight segment 202 of the movement path. The straight segment 202 extends from the manual forward-shift position "S" in the lateral direction of the vehicle away from the first turning point "(S)". Namely, the automatic forward-shift position "E" is located to the right of the manual forward-shift position "S". When the shift lever 170 is moved to the automatic forward-shift position "E", the drive system 10 is placed in the automatic shifting mode described above. In the present embodiment, the AUTO MODE switch 156 is not provided. The shift lever sensor device 140 is arranged to detect the movement of the shift lever 170 to the automatic forward-shift position. The present shift lever device 200 further includes a resisting mechanism 204 disposed between the manual and automatic forward-shift positions "S" and "E". The resisting mechanism 204 gives a resistance to the movements between the positions "S" and "E", such that the resistance has a peak value when the shift lever 170 is located intermediate between the two positions "S" and "E". The resisting mechanism 204 may include a biasing device such as a spring, and a cam. In the present embodiment using the shift lever device 200, the vehicle drive system 10 may be placed in the automatic shifting mode when the shift lever 170 is unintentionally moved rightwards from the manual forward-shift position "S" to the automatic forward-shift position "E" during forward running of the vehicle with the shift lever 170 placed in the manual forward-shift position "S". However, this movement of the shift lever 170 merely causes a change in the manual shifting mode to the automatic shifting mode, which may result in an automatic shift-down or shift-up action of the transmission 16, and does not cause a problem during the forward running of the vehicle.

The shift lever device 206 shown in Fig. 8B is constructed to support the shift lever 170 such that the shift lever is also shiftable from the fist turning point "(S)" to the automatic forward-shift position "E" along a straight segment 208 of the movement path. The straight segment 208 extends from the first turning point "(S)" in the longitudinal direction of the vehicle away from the neutral position "N". Namely, the automatic forward-shift position "E" is located rearwards of the first turning point "(S)". The present shift lever device 206 further includes a resisting mechanism 210 disposed between the first turning point "(S)" and the automatic forward-shift position "E".

The shift lever device 212 shown in Fig. 8C is constructed to support the shift lever 170 such that the shift lever is also shiftable from the second turning point "(N)" to the automatic forward-shift position "E" along a straight segment 214 of the movement path. The straight segment 214 extends from the second turning point "(N)" in the longitudinal direction of the vehicle away from the reverse drive position "R". Namely, the automatic forward-shift position "E" is located rearwards of the second turning point "(N)". The present shift lever device 212 further includes a resisting mechanism 216 disposed between the second turning point "(N)" and the automatic forward-shift position "E".

The shift lever device 218 shown in Fig. 8D is constructed to support the shift lever 170 such that the shift lever is also shiftable from the neutral position "N" to the automatic forward-shift position "E" along a straight segment 220 of the movement path. The straight segment 220 extends from the neutral position "N" in the longitudinal direction of the vehicle away from the first turning point "(S)". Namely, the automatic forward-shift position "E" is located frontwards of the neutral position "N". The present shift lever device 218 further includes a resisting mechanism 222 disposed between the neutral position "N" and the automatic forward-shift position "E".

The shift lever device 224 shown in Fig. 8E is constructed to support the shift lever 170 such that the shift lever is also shiftable from the second turning point "(N)" to the automatic forward-shift position "E" along a straight segment 226 of the movement path. The straight segment 226 extends from the second turning point "(N)" in the lateral direction of the vehicle away from the neutral position "N". Namely, the automatic forward-shift position "E" is located to the left of the second turning point "(N)". The present shift lever device 224 further includes a resisting mechanism 228 disposed between the second turning point "(N)" and the automatic forward-shift position "E".

The shift lever device 230 shown in Fig. 8F is constructed to support the shift lever 170 such that the shift lever is also shiftable from the neutral position "N" to the automatic forward-shift position "E" along a straight segment 232 of the movement path. The straight segment 232 extends from the neutral position "N" in the lateral direction of the vehicle away from the second turning point "(N)". Namely, the automatic forward-shift position "E" is located to the right of the neutral position "N". The present shift lever device 230 further includes a resisting mechanism 234 disposed between the neutral position "N" and the automatic forward-shift position "E".

The shift lever device 236 shown in Fig. 8G is constructed to support the shift lever 170 such that the shift lever is also shiftable from the first turning point "(S)" to the automatic forward-shift position "E" along a straight segment 238 of the movement path. The straight segment 238 extends from the first turning point "(S)" in the lateral direction of the vehicle away from the manual forward-shift position "S". Namely, the automatic forward-shift position "E" is located to the left of the first turning point "(S)". The present shift lever device 236 further includes a resisting mechanism 240 disposed between the first turning point "(S)" and the automatic forward-shift position "E". In the present embodiment using the shift lever device 236, the vehicle drive system 10 may be placed in the automatic shifting mode when the shift lever 170 is unintentionally moved leftwards from the first turning point "(S)" to the automatic forward-shift position "E" during forward running of the vehicle with the shift lever 170 placed in the manual forward-shift position "S". However, this movement of the shift lever 170 merely causes a change in the manual shifting mode to the automatic shifting mode, which may result in an automatic shift-down or shift-up action of the transmission 16, and does not cause a problem during the forward running of the vehicle.

The shift lever device 242 shown in Fig. 8H is constructed to support the shift lever 170 such that the shift lever is also shiftable from the manual forward-shift position "S" to the automatic forward-shift position "E" along the straight segment 238 of the movement path, as in the shift lever device 200 of Fig. 8A. The automatic forward-shift position "E" is located to the right of the manual forward-shift position "S". The present shift lever device 236 further includes a biasing device 244 for automatically returning the shift lever 170 from the manual forward-shift position "S" to the automatic forward-shift position "E". In this embodiment, the automatic forward-shift position "E" is an unstable position, like the shift-up and shift-down positions "(+)" and "(-)" toward which the shift lever 170 is biased by the respective biasing devices 182, 184 as shown in Fig. 7B. To detect the movement of the shift lever 170 to this automatic forward-shift position "E", the shift lever sensor device 140 includes an automatic shifting mode detector switch (which may be an automatic-return switch). In this ninth embodiment, too, the vehicle drive system 10 may be placed in the automatic shifting mode when the shift lever 170 is unintentionally moved rightwards from the manual forward-shift position "S" to the automatic forward-shift position "E" during forward running of the vehicle with the shift lever 170 placed in the manual forward-shift position "S". However, this movement of the shift lever 170 merely causes a change in the manual shifting mode to the automatic shifting mode, which may result in an automatic shift-down or shift-up action of the transmission 16, and does not cause a problem during the forward running of the vehicle.

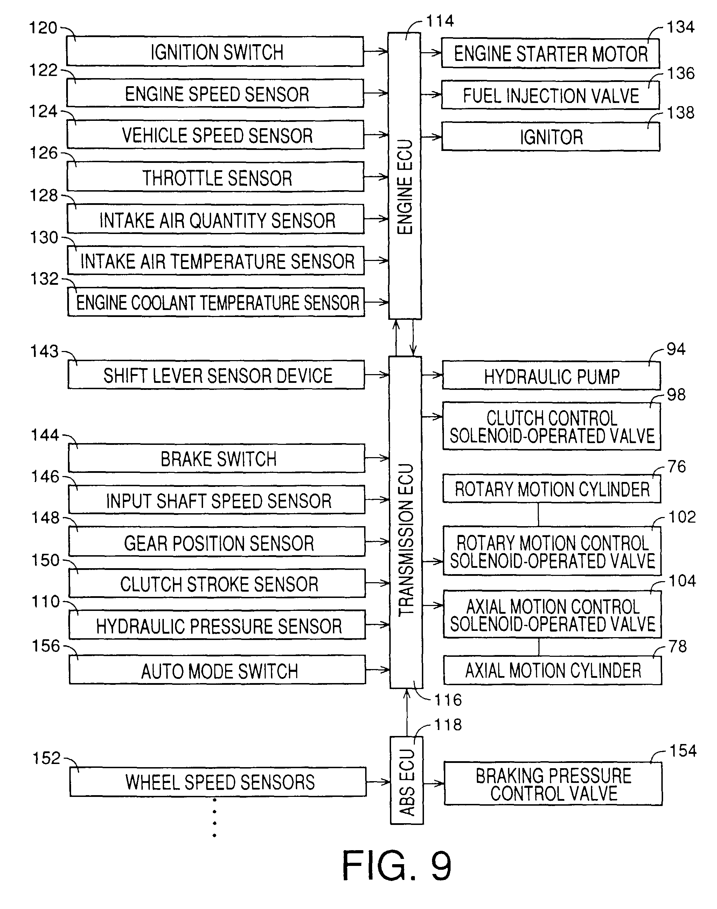

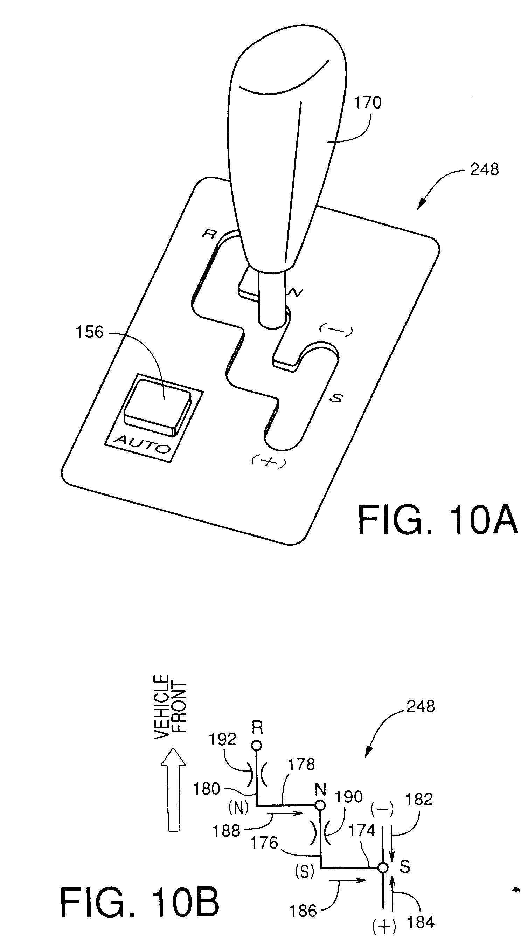

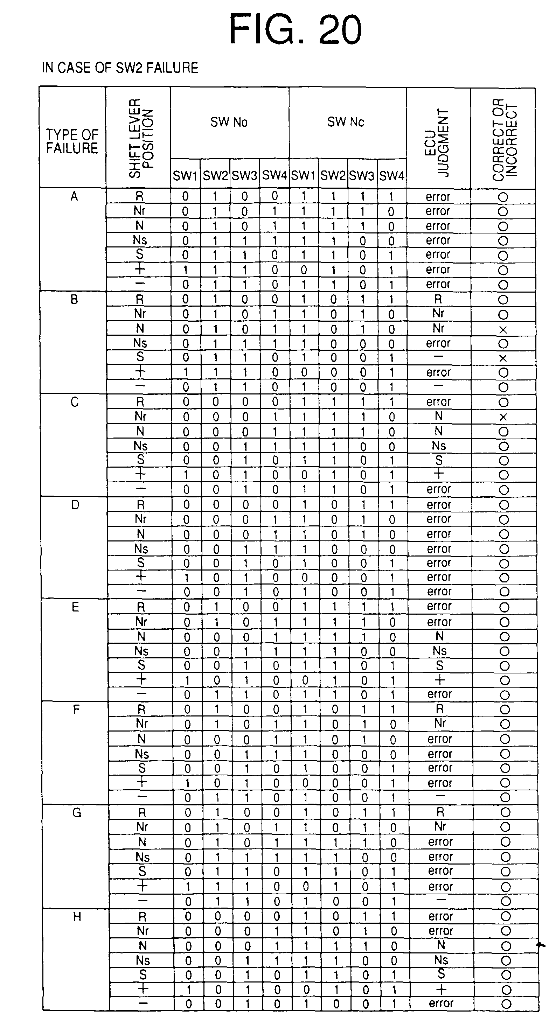

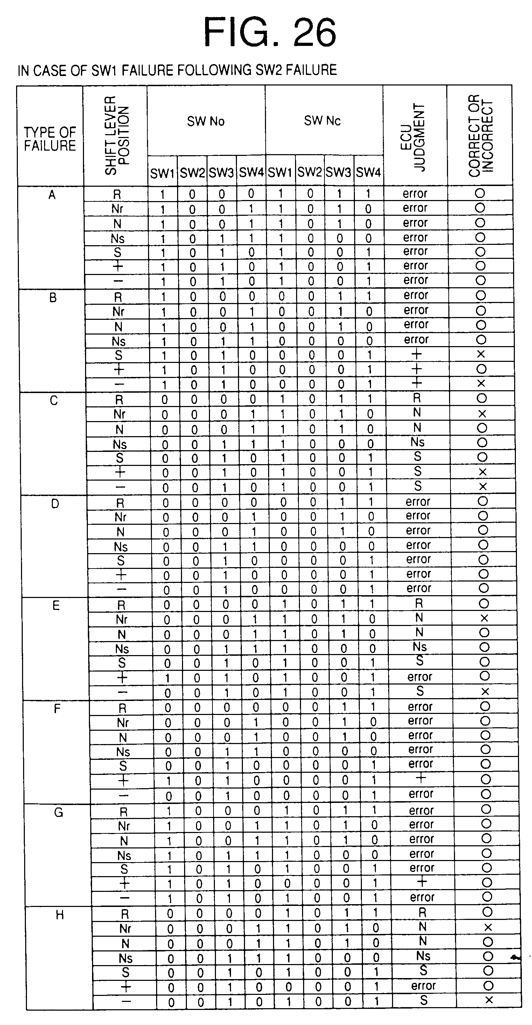

Referring next to Figs. 9-35, there will be described a vehicle drive system according to a tenth embodiment of the present invention, which is different from the first embodiment of Figs. 1-7 in that a shift lever position detecting device 143 is used the tenth embodiment in place of the shift lever sensor device 142 and the manual forward-shift switches 142, as shown in Fig. 9, while a shift lever device 248 is used in the tenth embodiment in place of the shift lever device 172, as shown in Figs. 10A and 10B.

The shift lever device 248 used in the present tenth embodiment is different from the shift lever device 172 of the first embodiment, in that the shift lever 170 is supported such that the shift lever 170 is shifted from the manual forward-shift position "S" rearwards to the shift-up position "(+)" and frontwards to the shift-down position "(-)", rather than frontwards to the shift-up position "(+)" and rearwards to the shift-down position "(-)". In the other aspects, the shift lever device 248 is identical with the shift lever device 172.

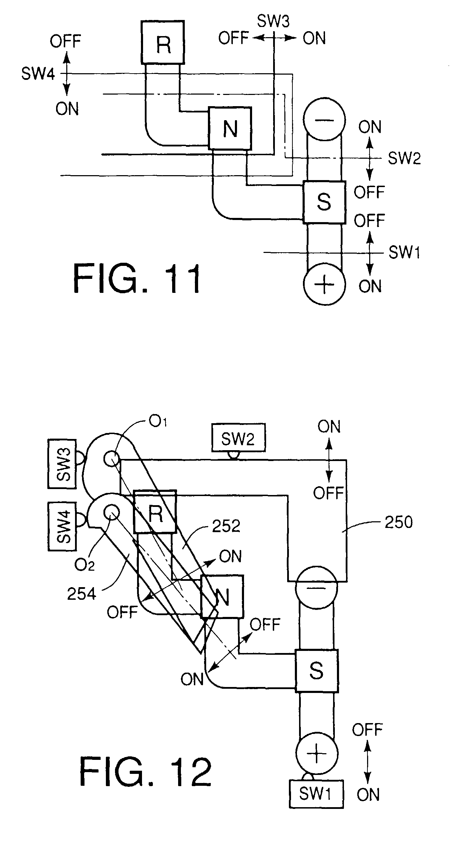

The shift lever position detecting device 143 is provided for detecting the five operating positions "R", "N", "S", "(+)" and "(-)" of the shift lever 170, unlike the shift lever sensor device 140 of Fig. 6 arranged to detect only the three stable positions "R", "N" and "S" of the shift lever 170. The shift lever position detecting device 143 consists of four ON-OFF switches SW1-SW4 as shown in Fig. 11. The first ON-OFF switch SW1 is in an ON state when the shift lever 170 is placed in the shift-up position "(+)", and in an OFF state when the shift lever 170 is placed in any one of the other operating positions. The second ON-OFF switch SW2 is in an ON state when the shift lever 170 is placed in the shift-down position "(-)" or the reverse drive position "R", and in an OFF state when the shift lever is placed in any one of the other operating positions. The third ON-OFF switch SW3 is in an OFF state when the shift lever 170 is placed in the neutral position "N" or the reverse drive position "R", and in an ON state when the shift lever is placed in any one of the other operating positions. The fourth ON-OFF switch SW4 is in an ON state when the shift lever 170 is placed in the neutral position "N", and in an OFF state when the shift lever is placed in any one of the other operating positions.

The ON-OFF switches SW1-SW4 are arranged as shown in Fig. 12. The first ON-OFF switch SW1 is arranged to be turned ON by contact of its plunger directly with the shift lever 170 which has been moved to the shift-up position "(+)". The second ON-OFF switch SW2 includes a slide plate 250 which is slidably moved frontwards of the vehicle by a frontward movement of the shift lever 170 to the shift-down position "(-)" or the reverse drive position "R". The second ON-OFF switch SW2 is turned ON by contact of its plunger with the the slide plate 250 which has been moved frontwards. The third ON-OFF switch SW3 includes a first arm 252 which is pivoted clockwise about its pivot axis O₁ by a movement of the shift lever 170 to the neutral position "N" or the reverse drive position "R". The third ON-OFF switch SW3 is turned OFF when the first arm 252 is pivoted clockwise. The fourth ON-OFF switch SW4 includes a second arm 254 which is pivoted clockwise about its pivot axis O₂ by a movement of the shift lever 170 to the neutral position "N". The fourth ON-OFF switch SW4 is turned ON when the second arm is pivoted clockwise.

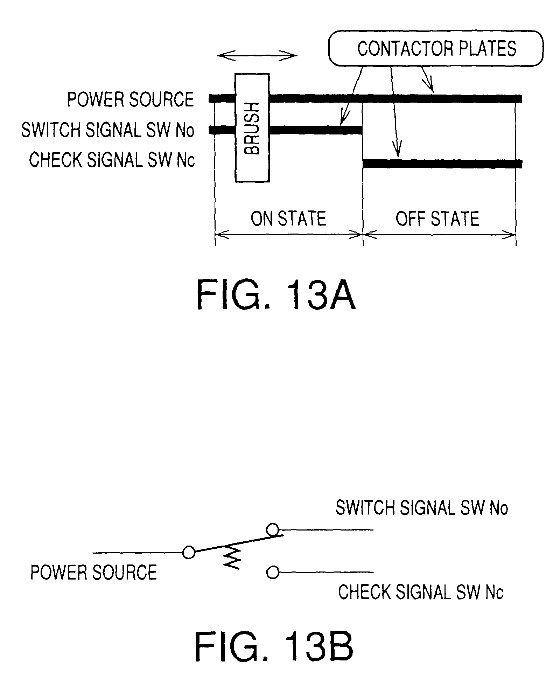

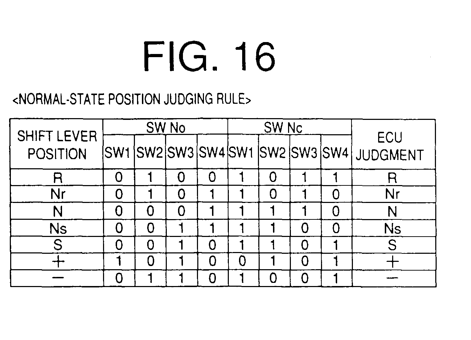

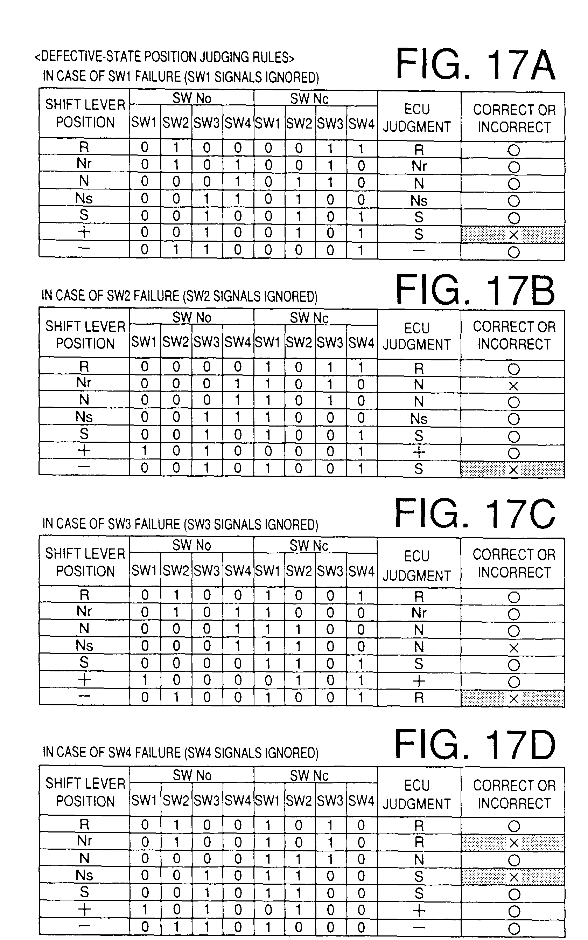

Each of the ON-OFF switches SW1-SW4 may be a slide switch type as shown in Fig. 13A or a microswitch type as shown in Fig. 13B. Either the slide switch type or the microswitch type is adapted to generate a switch signal SW No and a check signal SW Nc. The levels of the switch signal SW No and the check signal SW Nc when the ON-OFF switches SW1-SW4 are normal are indicated in the last row labelled "NORMAL STATE" in the table of Fig. 18. That is, the switch signal SW No has a low level (Lo) when the ON-OFF switch is in the ON state and a high level (Hi) when the switch is in the OFF state. On the other hand, the check signal SW Nc has a high level when the switch is in the ON state and a low level when the switch is in the OFF state. Fig. 16 indicates relationships between the levels of the switch signal SW No and the check signal SW Nc of each of the four ON-OFF switches SW1-SW4 and each of the five operating positions "R", "N", "S", "(+)" and "(-)" and two transient positions "Nr" and "Ns" of the shift lever 170. In the table of Fig. 16, "0" represents the high level (Hi) of the signals SW No and SW Nc, while "1" represents the low level (Lo) of the signals. This applies to the tables of Figs. 17, 19-34 and 36. The seven positions have respective different combinations of the levels of the switch and check signals SW No and SW Nc of the ON-OFF switches SW1-SW4. The transient position "Nr" is a position of the shift lever 170 in which the second and fourth ON-OFF switches SW2 and SW4 are both in the ON state. As is apparent from Figs. 10B and 11, the transient position "Nr" is a position intermediate between the reverse drive position "R" and the second turning point "(N)". On the other hand, the transient position "Ns" is a position of the shift lever 170 in which the third and fourth ON-OFF switches SW3 and SW4 are both in the ON state. As is also apparent from Figs. 10B and 11, this transient position "Ns" is a position intermediate between the neutral position "N" and the first turning point "(S)". The switch signal SW No and the check signal SW Nc respectively serve as a first signal and a second signal which are referred to in the appended claims.

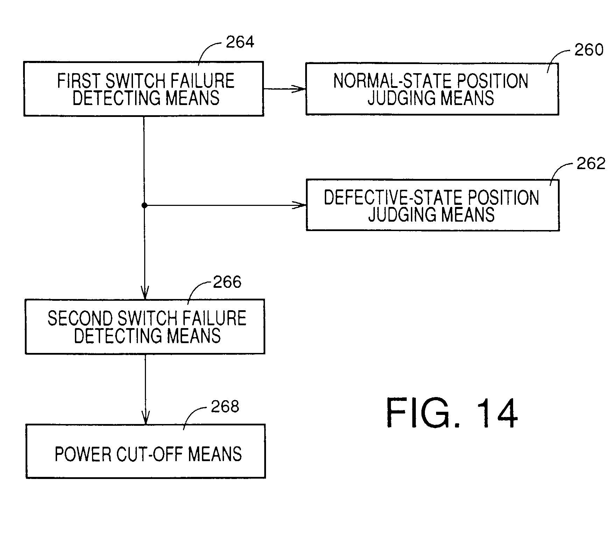

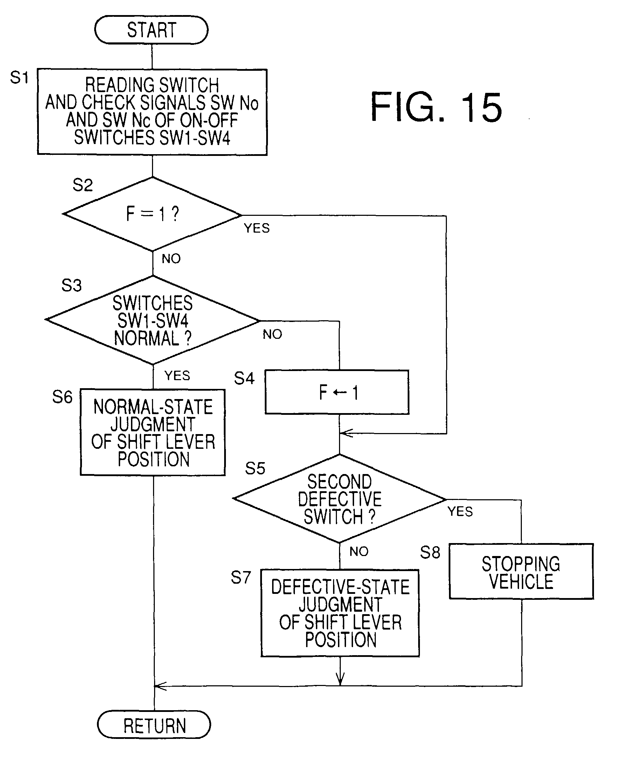

There will next be described operations of the transmission ECU 116 to detect or determine the operating positions of the shift lever 170 based on the signals SW No and SW Nc of the ON-OFF switches SW1-SW4 and to detect a failure or failures of the switches SW1-SW4. The transmission ECU 116 incorporates normal-state position judging means 260, defective-state position judging means 262, first switch failure detecting means 264, second switch failure detecting means 266, and power cut-off means 268, as indicated in the block diagram of Fig. 14. The transmission ECU 116 is adapted to execute a position detecting routine illustrated in the flow chart of Fig. 15. It will be understood that the normal-state position judging means 260, defective-state position judging means 262, first switch failure detecting means 264, second switch failure detecting means 266 and four ON-OFF switches SW1-SW4 cooperate with each other to constitute a shift lever position detecting device, and that the normal-state position judging means 260 constitutes first position judging means while the defective-state position judging means 262 constitutes second position judging means. It will also be understood that the relationships indicated in the table of Fig. 16 provide a normal-state or first position judging rule used by the first position judging means, namely, normal-state position judging means 260. The position detecting routine of Fig. 15 is repeatedly executed with a predetermined cycle time.

The normal-state position judging means 260 is arranged to judge or determine the currently selected or established one of the positions of the shift lever 170, as indicated in the rightmost column labelled "ECU JUDGMENT" in the table of Fig. 16, on the basis of the switch signal SW No and the check signal SW Nc of the ON-OFF switches SW1-SW4, and according to the first position judging rule of Fig. 16. On the other hand, the defective-state position judging means 262 is arranged to judge or determine the currently established one of the positions of the shift lever 170, as indicated in the rightmost columns labelled "ECU JUDGEMENT" in the tables of Figs. 17A, 17B, 17C and 17D, on the basis of the switch and check signals SW No, SW Nc of the normally functioning three switches of the four ON-OFF signals SW1-SW4, according to second position judging rules of Figs. 17A-17D which correspond to the respective cases where the respective four switches SW1-SW4 are defective or fail to normally function. The judgements indicated in Figs. 17A-17D may be made without having to using both the switch signals SW No and the check signals SW Nc of the ON-OFF switches SW1-SW4, that is, with either the switch signals SW No or the check signals SW Nc. It is noted that the tables of Figs. 17 and 19-34 indicate the high levels (0) of the signals SW No and SW Nc of the ON-OFF switch which is judged to be defective. However, the these high levels are ignored by the defective-state position judging means 262.

The judgements indicated by "x" marks in the rightmost columns labelled "CORRECT OR INCORRECT" in the tables of Figs. 17A-17D are incorrect or false judgements which are different from the correct judgements made by the normal-state position judging means 260 according to the first position judging rule of Fig. 16. These incorrect judgments have a risk of causing an inconvenience which may be serious, and will be further analyzed. Any erroneous judgment of the shifting movement to any one of the positions "N", "Nr" and "Ns" as the shifting movement to another of these position will not be further analyzed, since the transmission ECU 116 interprets the transient positions "Nr" and "Ns" as the neutral position "N".

In the case of a failure of the first ON-OFF switch SW1, the shifting movement of the shift lever 170 to the shift-up position "(+)" is erroneously judged to be the shifting movement to the manual forward-shift position "S", as indicated in Fig. 17A, and the transmission 16 cannot be shifted up by moving the shift lever 170 to the shift-up position "(+)". In this event, however, the transmission 16 can be maintained in the currently established one of the forward drive position, and can be shifted up in the automatic shifting mode without operating the shift lever 170 to the shift-up position "(+)". Therefore, the incorrect or erroneous judgement in question will not cause a serious inconvenience.

In the case of a failure of the second ON-OFF switch SW2, the shifting movement of the shift lever 170 to the shift-down position "(-)" is erroneously judged to be the shifting movement to the manual forward-shift position "S", as indicated in Fig. 16B, and the transmission 16 cannot be shifted down by moving the shift lever 170 to the shift-down position "(-)". In this event, however, the transmission 16 is maintained in the currently established forward drive position, and can be shifted down in the automatic shifting mode without operating the shift lever 170 to the shift-down position "(-)". Therefore, the incorrect judgement in question will not cause a serious inconvenience.

In the case of a failure of the third ON-OFF switch SW4, the shifting movement of the shift lever 170 to the shift-down position "(-)" is erroneously judged to be the shifting movement to the reverse drive position "R", as indicated in Fig. 17C. That is, the shifting movement from the manual forward-shift position "S" to the shift-down position "(-)" is erroneously judged to be the shifting movement from the manual forward-shift position "S" directly to the reverse drive position "R". Since this shifting movement does not usually take place, the defective-state position judging means 262 is adapted to either ignore this erroneous judgement, or maintain the last judgment that the shift lever 170 is placed in the manual forward-shift position "S", so that an adverse influence of the erroneous judgment on the control of the transmission 16 is prevented.

In the case of a failure of the fourth ON-OFF switch SW4, the shifting movement of the shift lever 170 to the transient position "Nr" is erroneously judged to be the shifting movement to the reverse drive position "R", and the shifting movement to the transient position "Ns" is erroneously judged to be the shifting movement to the manual forward-shift position "S", as indicated in Fig. 17D. Although these erroneous judgments result in earlier shifting of the transmission 16 to the reverse drive position "R" or the manual forward-shift position "S", the judgments will not cause a serious inconvenience.

Referring back to Fig. 14, the first switch failure detecting means 264 is arranged to determine the presence or absence of a failure of any one of the ON-OFF switches SW1-SW4 and identify the defective or faulty ON-OFF switch, depending upon whether the combination of the levels of the switch signal SW No and the check signal SW Nc of each of the ON-OFF switches SW1-SW4 meets the first position judging rule of Fig. 16, and depending upon whether both of the switch and check signals SW No and SW Nc of each ON-OFF switch SW1-SW4 have the high level or low level. The second switch failure detecting means 266 is arranged to determine the presence or absence of a failure of any one of the three switches of the four ON-OFF switches SW1-SW4 (that is, the switches other than the first faulty switch which has been judged to be defective by the first switch failure detecting means 264), and identify the second defective or faulty ON-OFF switch, depending upon whether the combination of the levels of the switch and check signals SW No and SW Nc of each of the three switches meets the second position judging rules of Figs. 17A-17D, and depending upon whether both of the switch and check signals SW No and SW Nc of each ON-OFF switch in question have the high level or low level.

The position detecting routine illustrated in the flow chart of Fig. 15 is initiated with step S1 to read the switch signals SW No and the check signals SW Nc of the four ON-OFF switches SW1-SW4. Step S1 is followed by step S2 to determine whether a FAILURE flag F is set at "1" or not. The FAILURE flag F set at "1" indicates that any one of the ON-OFF switches SW1-SW4 has been judged to be defective or faulty. If an affirmative decision (YES) is obtained in step S2, the control flow goes to step S5 while skipping steps S3 and S4. If a negative decision (NO) is obtained in step S2, the control flow goes to step S3. The FAILURE flag F is reset to "0" upon initialization of the transmission ECU 116, and is normally set at "0". The flag F is set to "1" when any one of the switches SW1-SW4 is judged to be faulty.

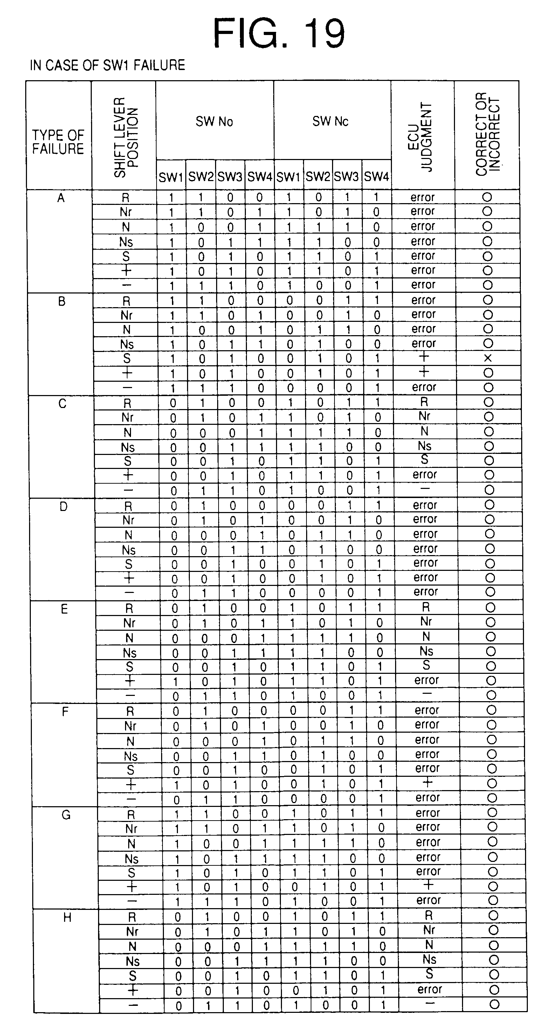

Step S3 is provided to determine whether all of the four ON-OFF switches SW1-SW4 are normal. This step S3 is implemented by the first failure detecting means 264. Figs. 19-22 indicate judgements by the first switch failure detecting means 264. Detection of a failure of any ON-OFF switch is indicated by "error" in the column labelled "ECU JUDGMENT" in the tables of Figs. 19-22. The types of failure A-H in the leftmost column in Figs. 19-22 are identical with those in Fig. 18, and cover all types of failure of the ON-OFF switches SW1-SW4 that can be generally considered to take place. In any case identified by the "error" mark in the column "ECU JUDGMENT" in Figs. 19-22, a negative decision (NO) is obtained in step S3, and the control flow goes to step S4. In the other cases, an affirmative decision (YES) is obtained in step S3, and the control flow goes to step S6 in which the normal-state position judging means 260 determines the currently established one of the operating positions of the shift lever 170, according to the first position judging rule of Fig. 16. The transmission 16 is controlled according to the judgment made by the normal-state position judging means 260.

In step S3, the affirmative decision (YES) is obtained where the four ON-OFF switches SW1-SW4 are all normal. Even if any of the switches SW1-SW4 is actually defective, the affirmative decision (YES) is obtained in step S3 in all cases except those indicated by the "error" mark in Figs. 19-22. In these cases, the control flow goes to step S6 until a failure of any one of the switches SW1-SW4 is detected upon subsequent shifting movements of the shift lever 170 to the other operating positions. Described more specifically, step S3 is formulated such that the negative decision (NO) is not obtained as long as the combination of the levels of the switch and check signals SW No and SW Nc of each of the ON-OFF switches SW1-SW4 meets any one of the combinations according to the first position judging rule of Fig. 16, whereby the judgments indicated in the column "ECU JUDGEMENT" in Figs. 19-22 are made in step S6. The "o" mark in the rightmost column labelled "CORRECT OR INCORRECT" in the tables of Figs. 19-22 indicates a correct judgement according to the first position judging rule of Fig. 16. The transmission 16 controlled according to this judgement will not cause any problem. The "x" mark in the rightmost column indicates an incorrect or false judgment which does not meet the first position judging rule of Fig. 16. In this case, there may arise an inconvenience.

As indicated above, the transmission ECU 116 interprets the transient positions "Nr" and "Ns" as the neutral position "N". Accordingly, the erroneous judgments relating to any shifting movements between two of these positions "Nr", "Ns" and "N" will not cause any inconvenience. Further, an erroneous judgment of this shifting movement of the shift lever 170 to the reverse drive position "R" or the manual forward-shift position "S" as the shifting movement to the shift-down position "(-)" or the shift-up position "(+)" will not cause a serious inconvenience, since this erroneous judgment will merely cause the transmission 16 to be placed in the power-cut off position. An erroneous judgement relating to any shifting movements between the manual forward-shift position "S" and the shift-up or shift-down position "(+)", "(-)" will not cause a serious inconvenience, since this erroneous judgment will merely cause a shift-up or shift-down action of the transmission 16 without an operation of the shift lever 170 or make it impossible to manually shift-up or shift-down the transmission 16, but will maintain the transmission 16 in any one of the forward drive positions. In this respect, it is noted that the probability of occurrence of the failure types B and C is extremely low. It follows from this that the probability of the erroneous judgment due to the type B or C failure of the ON-OFF switches SW1-SW4 is extremely low. Accordingly, a detailed analysis will be made on the erroneous judgments other than those described above.

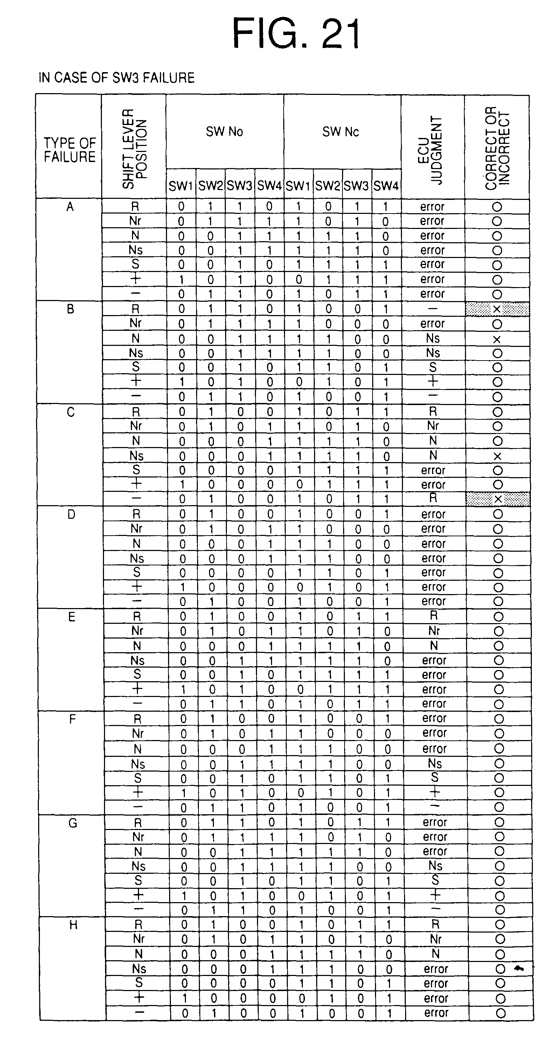

In the case of a failure of the third ON-OFF switch SW3 as shown in Fig. 21, the shifting movement of the shift lever 170 to the reverse drive position "R" is erroneously judged to be the shift movement to the shift-down position "(-)", due to the failure type B. Further, the shifting movement to the shift-down position "(-)" is erroneously judged to be the shifting movement to the reverse drive position "R", due to the failure type C. Since the shifting movements from the reverse drive position "R" directly to the shift-down position "(-)" and vice versa are not actually available, the normal-state position judging means 260 is adapted to ignore the erroneous judgments or active the defective-state position judging means 262, so as to prevent an adverse influence of the erroneous judgments on the control of the transmission 16.

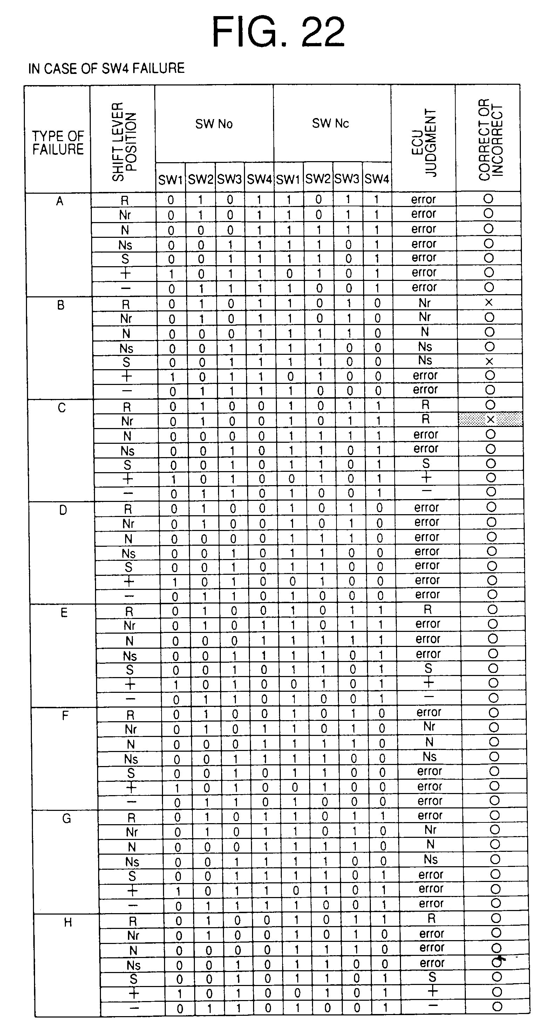

In the case of a failure of the fourth ON-OFF switch SW4 as shown in Fig. 22, the shifting movement of the shift lever 170 to the transient position "Nr" is erroneously judged to be the shifting movement to the reverse drive position "R", due to the failure type C. This erroneous judgment merely results in the shifting of the transmission 16 to the rear drive position when the shift lever 16 is actually located between the second turning point "(N)" and the reverse drive position "R", that is, an earlier shifting of the transmission 16 to the rear drive position. In this respect, it is noted that the probability of occurrence of the type C failure is extremely low, so that the probability of the erroneous judgement due to the type C failure is extremely low.

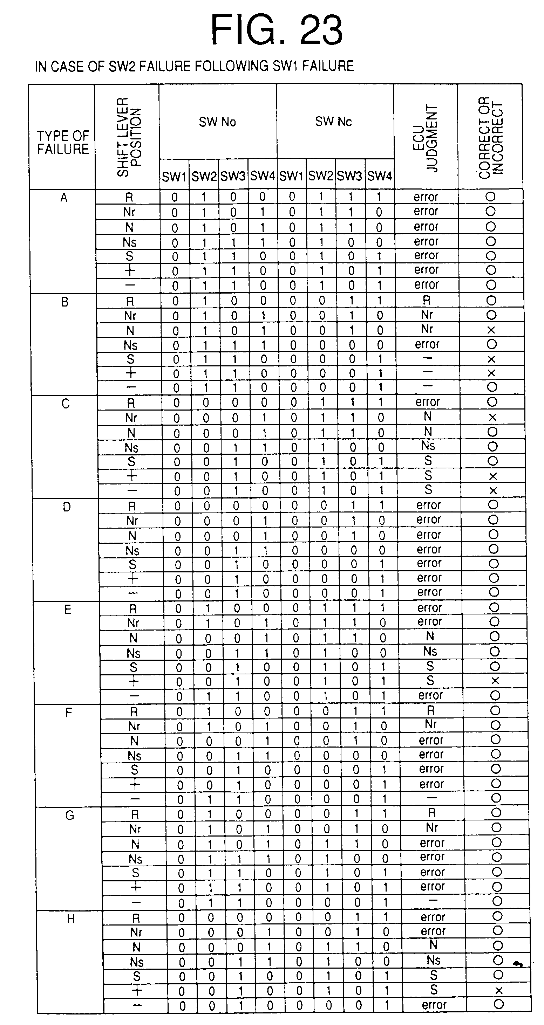

Referring back to Fig. 15, if a negative decision (NO) is obtained in step S3, that is, if any one of the four ON-OFF switches SW1-SW4 is defective, the control flow goes to step S4 to set the FAILURE flag F to "1" and provide an indication of the failure of that ON-OFF switch, and then goes to step S5. With the FAILURE flag F set to "1", step S2 is followed directly by step S5 in the next cycle of execution of the routine. In step S5, the second switch failure detecting means 266 determines whether any one of the three ON-OFF switches (switches SW1-SW4 except the one judge to be defective in step S3) is defective. Namely, step S5 is provided to determine whether two switches of the four ON-OFF switches SW1-SW4 are defective. Figs. 23-34 indicate judgements by the second switch failure detecting means 266. Detection of a failure of any ON-OFF switch is indicated by "error" in the column labelled "ECU JUDGMENT" in the tables of Figs. 23-34. The types of failure A-H in the leftmost column in Figs. 23-34 are identical with those in Fig. 18. In any case identified by the "error" mark in the column "ECU JUDGMENT" in Figs. 23-34, an affirmative decision (YES) is obtained in step S5, and the control flow goes to step S8. In the other cases, a negative decision (NO) is obtained in step S5, and the control flow goes to step S7 in which the defective-state position judging means 262 determines the currently established one of the operating positions of the shift lever 170, according to the second position judging rule of Fig. 17. The transmission 16 is controlled according to the judgment made by the defective-state position judging means 262. In step S8, the power cut-off means 218 controls the shifting actuator 76, 78 to shift the transmission 16 to the power cut-off position, for stopping the vehicle.

In step S5, the negative decision (NO) is obtained where the three ON-OFF switches other than the switch which has been judged defective in step S3 are all normal. Even if any of these three ON-OFF switches is actually defective, the negative decision (NO) is obtained in step S5 in all cases except those indicated by the "error" mark in Figs. 23-34. In these cases, the control flow goes to step S7 until a failure of any one of those three ON-OFF switches is detected upon subsequent shifting movements of the shift lever 170 to the other operating positions. Described more specifically, step S5 is formulated such that the affirmative decision (YES) is not obtained as long as the combination of the levels of the switch and check signals SW No and SW Nc of each of the ON-OFF switches SW1-SW4 meets any one of the combinations according to the second position judging rules of Figs. 17A-17D, whereby the judgments indicated in the column "ECU JUDGEMENT" in Figs. 23-34 are made in step S7. The "o" mark in the rightmost column labelled "CORRECT OR INCORRECT" in the tables of Figs. 23-34 indicates a correct judgement according to the first position judging rule of Fig. 16. The transmission 16 controlled according to this judgement will not cause any problem. The "x" mark in the rightmost column indicates an incorrect or false judgment which does not meet the first position judging rule of Fig. 16. In this case, there may arise an inconvenience. As indicated above, any serious inconvenience will arise in the cases of: the erroneous judgments relating to any shifting movements of the shift lever 170 between two of the positions "Nr", "Ns" and "N"; the erroneous judgment of the shifting movement to the reverse drive position "R" or the manual forward-shift position "S" as the shifting movement to the shift-down position "(-)" or the shift-up position "(+)"; and the erroneous judgment of the shifting movement to the position "R", "S", "(-)" or "(+)" as the shifting movement to the position "N", "Nr" or "Ns". Accordingly, a detailed analysis will be made on the erroneous judgments other than those erroneous judgments described above.

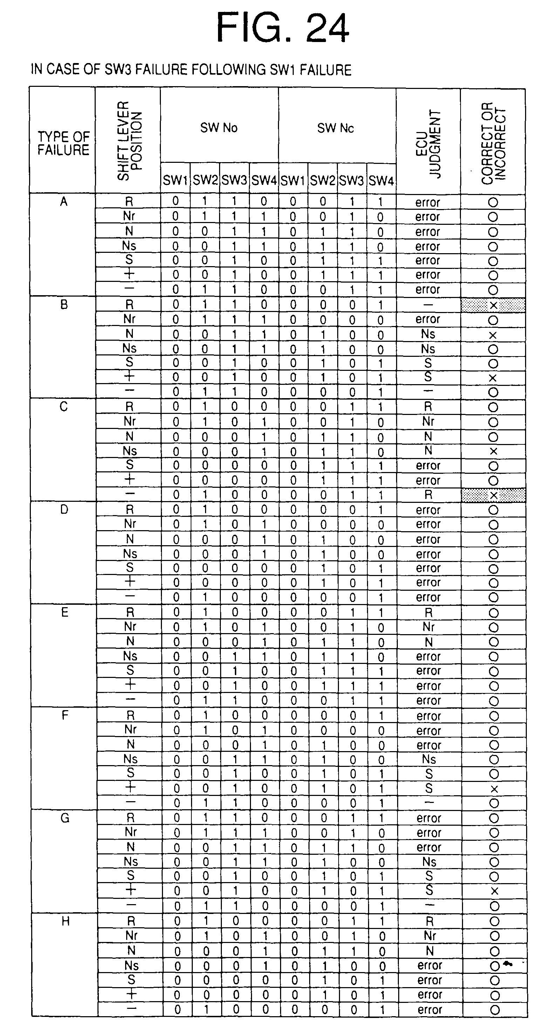

In the case of a failure of the third ON-OFF switch SW3 following a failure of the first ON-OFF switch SW1 as shown in Fig. 24, the shifting movement of the shift lever 170 to the reverse drive position "R" is erroneously judged to be the shifting movement to the shift-down position "(-)" due to the type B failure, and the shifting movement to the shift-down position "(-)" is erroneously judged to be the shifting movement to the reverse position "R" due to the type C failure. These erroneous judgments have been described with respect to the case of the failure of the third ON-OFF switch SW3 indicated in Fig. 21.

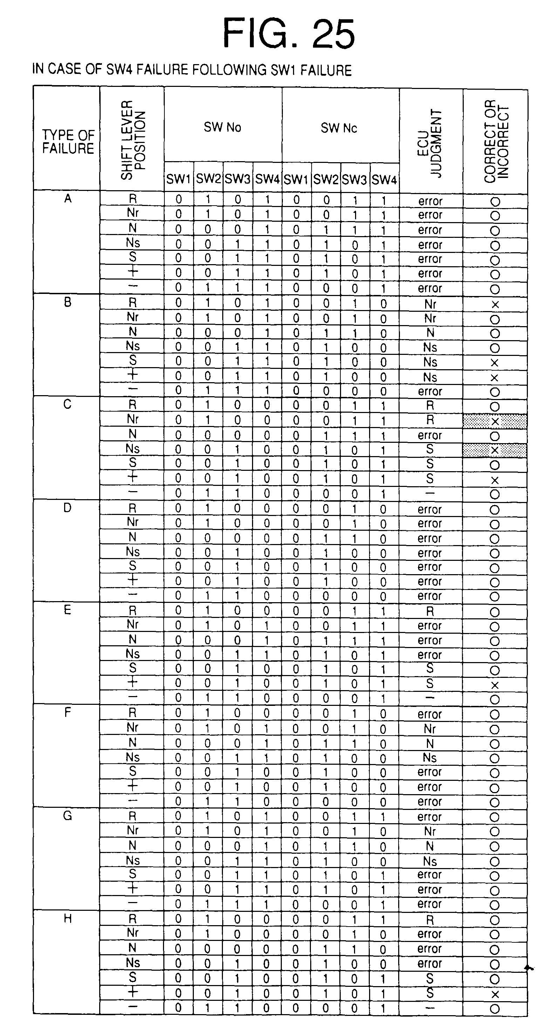

In the case of a failure of the fourth ON-OFF switch SW4 following a failure of the first ON-OFF switch SW1 as shown in Fig. 25, the shifting movement of the shift lever 170 to the transient position "Nr" is erroneously judged to be the shifting movement to the reverse drive position "R" due to the type C failure. This erroneous judgment has been described by reference to Fig. 22. Further, the shifting movement to the transient position "Ns" is erroneously judged to be the shifting movement to the manual forward-shift position "S" due to the type C failure. This erroneous judgment results in shifting the transmission 16 to the manual forward-shift position "S" when the shift lever 170 is still located at the transient position "Ns" between the first turning point "(S)" and the manual forward-shift position "S". That is, this erroneous judgment merely results in an earlier shifting of the transmission 16 to the manual forward-shift position "S". Since the probability of occurrence of the type C failure is extremely low, the probability of this erroneous judgment is accordingly low.

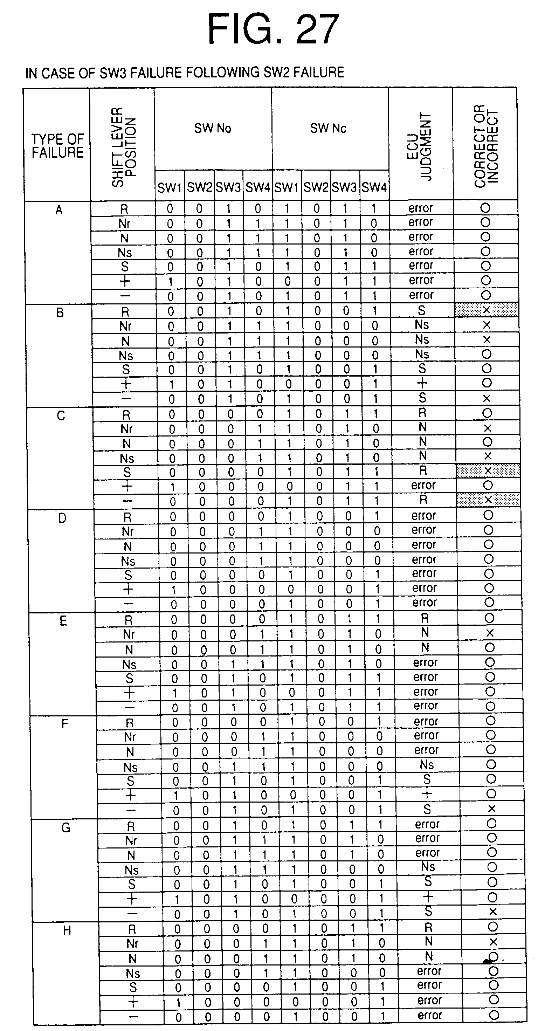

In the case of a failure of the third ON-OFF switch SW3 following a failure of the second ON-OFF switch SW2 as shown in Fig. 27, the shifting movement to the shift-down position "(-)" is erroneously judged to be the shifting movement to the reverse drive position "R" due to the type C failure. This erroneous judgment has been described above by reference to Fig. 21. Further, the shifting movement to the reverse drive position "R" is erroneously judged to be the shifting movement to the manual forward-shift position "S" due to the type B failure, and the shifting movement to the manual forward-shift position "S" is erroneously judged to be the shifting movement to the reverse drive position "R" due to the type C failure. Since these shifting movements are not actually available, the defective-state position judging means 262 is adapted to ignore these erroneous judgments or take any other action to prevent an adverse influence of the erroneous judgments on the control of the transmission 16.

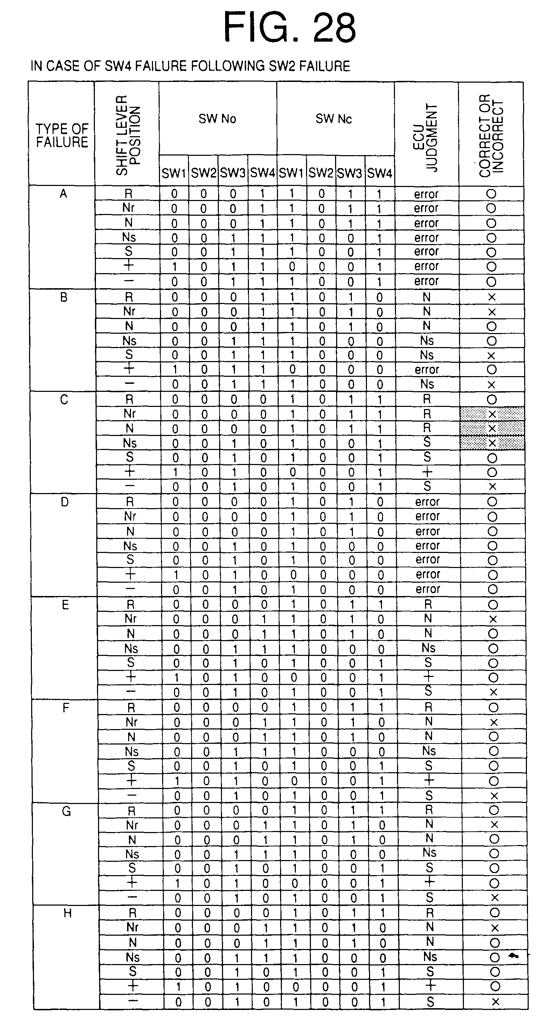

In the case of a failure of the fourth ON-OFF switch SW4 following a failure of the second ON-OFF switch SW2 as shown in Fig. 28, the shifting movements to the transient positions "Nr" and the "Ns" are erroneously judged to be the shifting movements to the reverse drive position "R" and the manual forward-shift position "S", respectively, due to the type C failure. These erroneous judgments have been described above by reference to Fig. 25. Further, the shifting movement to the neutral position "N" is erroneously judged to be the shifting movement to the reverse drive position "R" due to the type C failure. In this case, the transmission ECU 116 activates a suitable alarm indicator such as a buzzer to generate a warning sound, so that the vehicle operator may promptly take a suitable action to prevent an unintended rearward running of the vehicle.

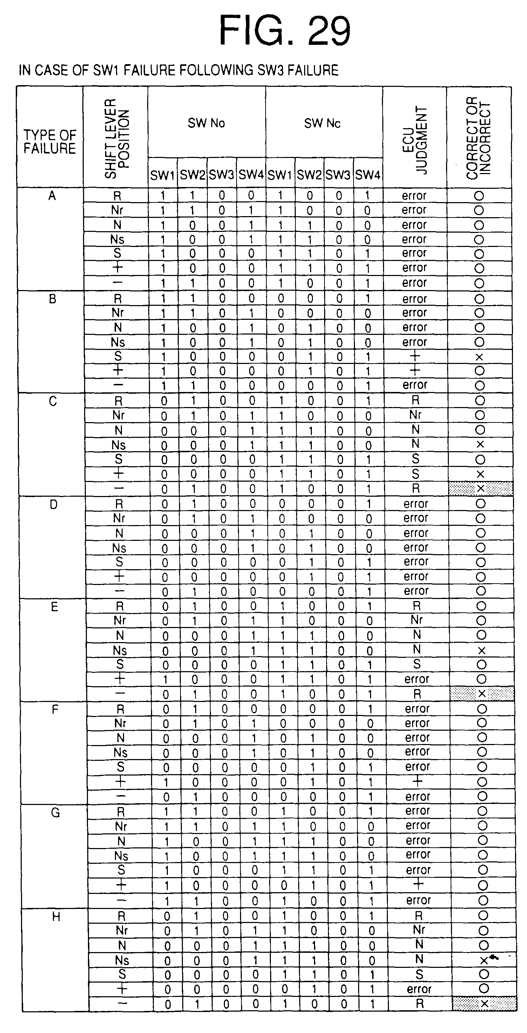

In the case of a failure of the first ON-OFF switch SW1 following a failure of the third ON-OFF switch SW3 as shown in Fig. 29, the shifting movement to the shift-down position "(-)" is erroneously judged to be the shifting movement to the reverse drive position "R" due to the type C failure. This erroneous judgment has been described above by reference to Fig. 21. Further, the shifting movement to the shift-down position "(-)" is erroneously judged to be the shifting movement to the reverse drive position "R" due to the type H failure. This erroneous judgment is ignored by the defective-state judging means 262.

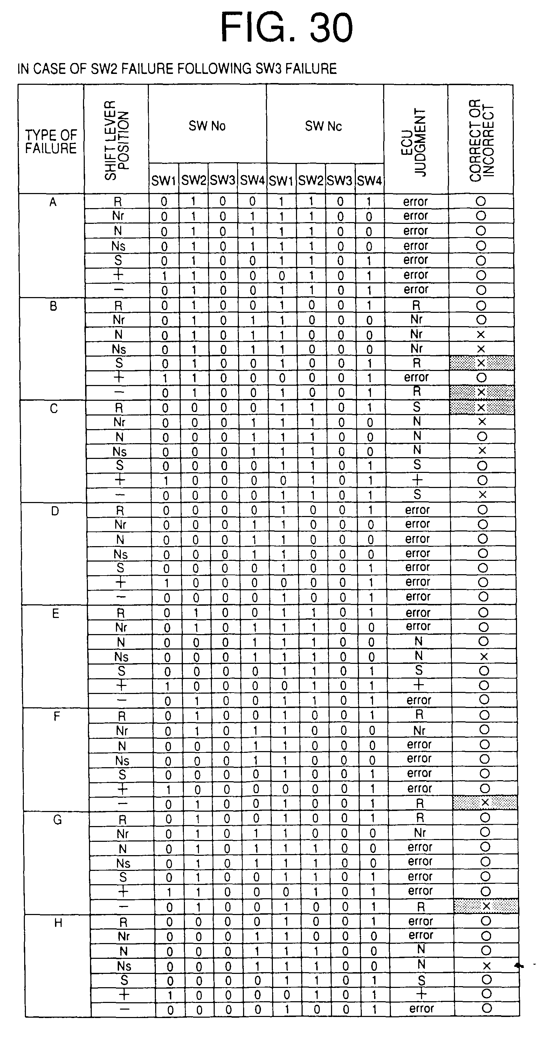

In the case of a failure of the second ON-OFF switch SW2 following a failure of the third ON-OFF switch SW3 as shown in Fig. 30, the shifting movement to the manual forward-shift position "S" is erroneously judged to be the shifting movement to the reverse drive position "R" due to the type B failure, and the shifting movement to the reverse drive position "R" is erroneously judged to be the shifting movement to the manual forward-shift position "S" due to the type C failure. Further, the shifting movement to the shift-down position "(-)" is erroneously judged to be the shifting movement to the reverse drive position "R" due to the type F or G failure. These erroneous judgments are ignored by the defective-sate position judging means 262.

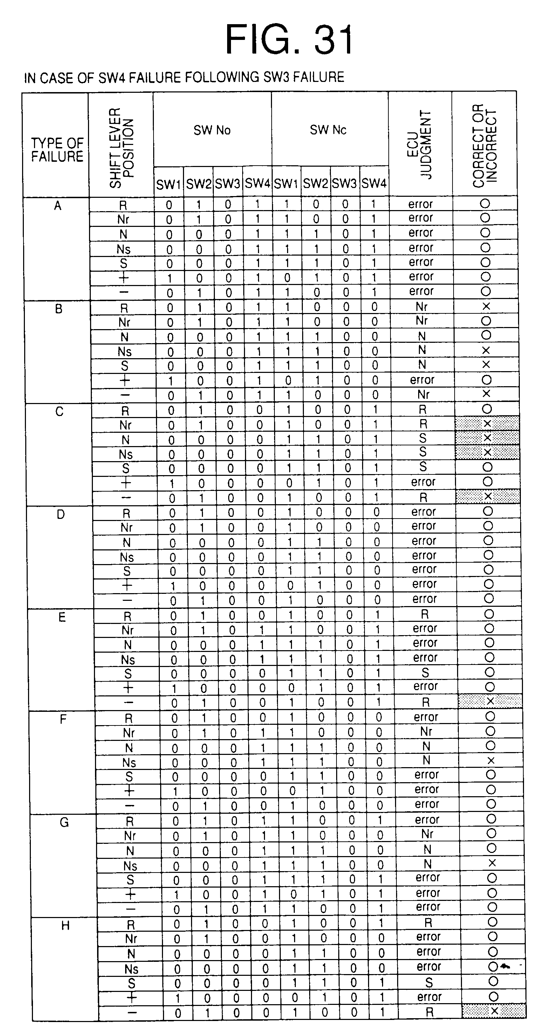

In the case of a failure of the fourth ON-OFF switch SW4 following a failure of the third ON-OFF switch SW3 as shown in Fig. 31, the shifting movements to the transient positions "Nr" and the "Ns" are erroneously judged to be the shifting movements to the reverse drive position "R" and the manual forward-shift position "S", respectively, due to the type C failure. These erroneous judgments have been described above by reference to Fig. 25. Further, the shifting movement to the neutral position "N" is erroneously judged to be the shifting movement to the manual forward-shift position "S" due to the type C failure. Although this erroneous judgment may result in shifting the transmission 16 to the manual forward-shift position "S" with the shift lever 170 placed in the neutral position "N", the probability of occurrence of the type C failure is extremely low, and the probability of this erroneous judgment is accordingly low. Furthermore, the shifting movement to the shift-down position "(-)" is erroneously judged to be the shifting movement to the reverse drive position "R" due to the type E or H failure. This erroneous judgment is ignored by the defective-state position judging means 262.

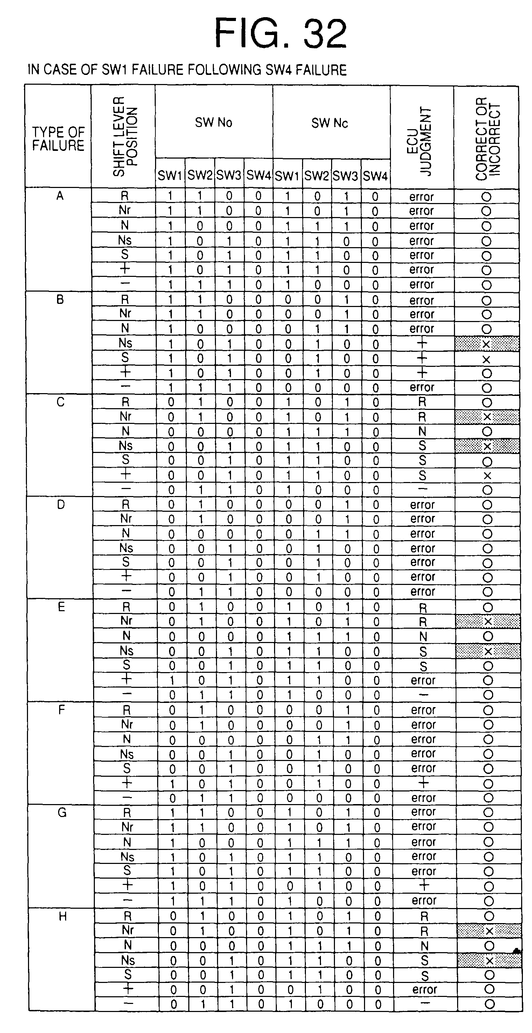

In the case of a failure of the first ON-OFF switch SW1 following a failure of the fourth ON-OFF switch SW4 as shown in Fig. 32, the shifting movement to the transient position "Nr" is erroneously judged to be the shifting movement to the reverse drive position "R" due to the type C, E or H failure. This erroneous judgment results in shifting the transmission 16 to the rear drive position with the shift lever 170 located at the transient position "Nr". That is, this erroneous judgment merely results in an earlier shifting of the transmission 16 to the rear drive position, and will not cause an inconvenience. Further, the shifting movement to the transient position "Ns" is erroneously judged to be the shifting movement to the manual forward-shift position "S" due to the type C, E or H failure. This erroneous judgment merely results in an earlier shifting of the transmission 16 to the manual forward-shift position, and will not cause an inconvenience. Furthermore, the shifting movement to the transient position "Ns" is erroneously judged to be the shifting movement to the shift-u[ position "(+)" due to the type B failure. Since the shifting movement from the transient position "Ns" directly to the shift-up position "(+)" is not actually available, this erroneous judgment, the defective-state position judging means 262 is adapted to ignore these erroneous judgments or take any other action to prevent an adverse influence of the erroneous judgments on the control of the transmission 16.

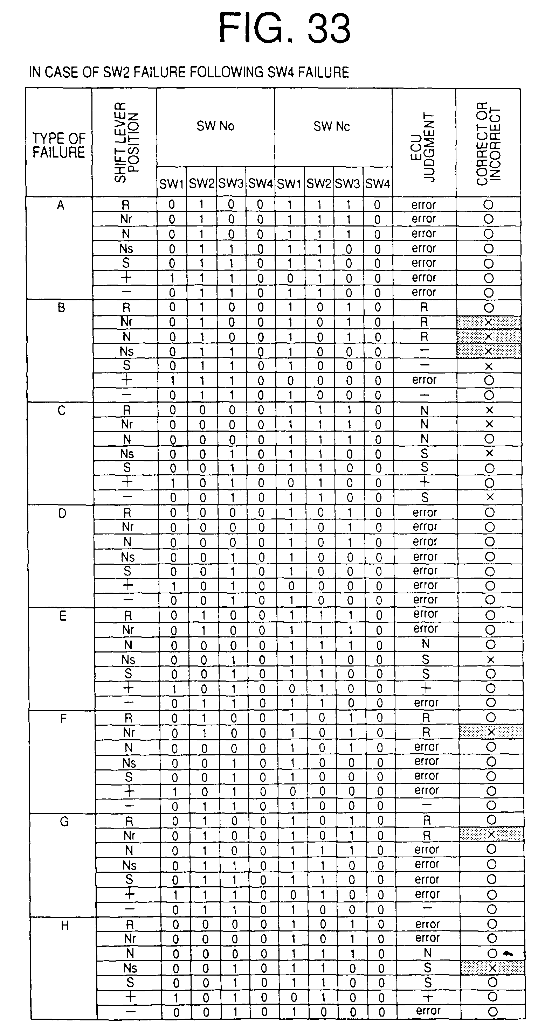

In the case of a failure of the second ON-OFF switch SW2 following a failure of the fourth ON-OFF switch SW4 as shown in Fig. 33, the shifting movement to the transient position "Nr" is erroneously judged to be the shifting movement to the reverse drive position "R" due to the type B, F or G failure. This erroneous judgment merely result in an earlier shifting of the transmission 16 to the rear drive position, and will not cause an inconvenience. Further, the shifting movement to the transient position "Ns" is erroneously judged to be the shifting movement to the manual forward-shift position "S" due to the type H failure. This erroneous movement merely results in an earlier shifting of the transmission 16 to the manual forward-shift position "S", and will not cause an inconvenience. Furthermore, the shifting movement to the neutral position "N" is erroneously judged to be the shifting movement to the reverse drive position "R" due to the type C failure. In this case, the transmission ECU 116 activates a suitable alarm indicator to generate a warning sound so that the vehicle operator may promptly take a suitable action to prevent an unintended rearward running of the vehicle. Further, the shifting movement to the transient position "Ns" is erroneously judged to be the shifting movement to the shift-down position "(-)" due to the type B failure. Since the shifting movement from the neutral position "N" directly to the shift-down position "(-)" is not actually available, the defective-state position judging means 262 ignores this erroneous judgement or take any other action to prevent an adverse influence of the erroneous judgment on the control of the transmission 16.

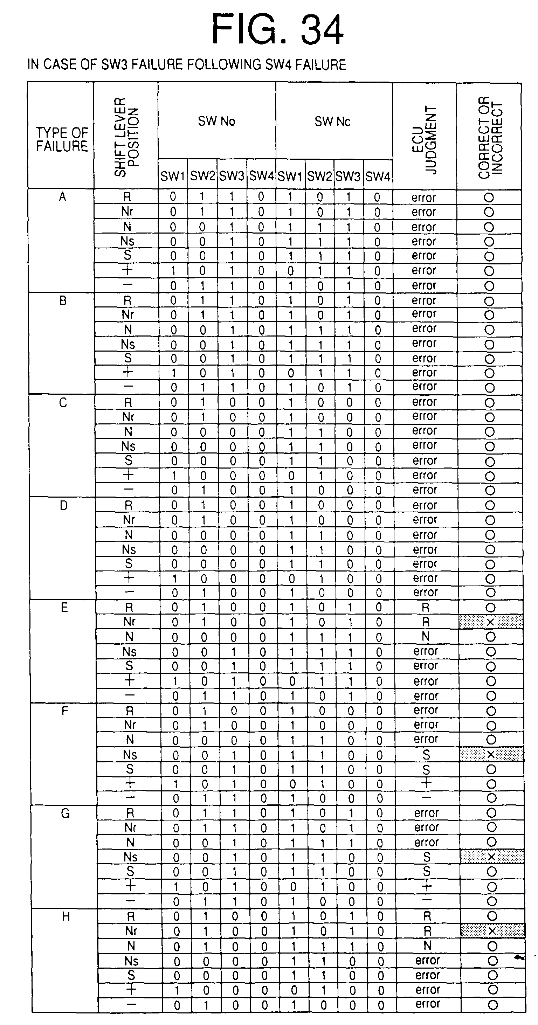

In the case of a failure of the third ON-OFF switch SW3 following a failure of the fourth ON-OFF switch SW4 as shown in Fig. 34, the shifting movement to the transient position "Nr" is erroneously judged to be the shifting movement to the reverse drive position "R" due to the type E or H failure. This erroneous judgment merely results in an earlier shifting of the transmission 16 to the rear drive position, and will not cause an inconvenience. Further, the shifting movement to the transient position "Ns" is erroneously judged to be the shifting movement to the manual forward-shift position "S" due to the type F or G failure. This erroneous judgement merely results in an earlier shifting of the transmission 16 to the manual forward-shift position "S", and will not cause an inconvenience.

In the present shift lever position detecting device including the normal-state position judging means 260, defective-state position judging means 262, first switch failure detecting means 264, second switch failure detecting means 266 and four ON-OFF switches SW1-SW4, the currently established one of the five operating positions "R", "N", "S", "(-)" and "(+)" of the shift lever 170 is normally detected by the normal-state position judging means 260 on the basis of the signal levels of the four ON-OFF switches SW1-SW4 and according to the first or normal-state position judging rule of Fig. 16. Since only the four ON-OFF switches SW1-SW4 are used, the shift lever position detecting device is available at a relatively low cost. In addition, even in the event of a failure of one of the four ON-OFF switches SW1-SW4, the defective-state position judging means 262 is capable of correctly detecting the currently established one of at least the three positions, namely, the manual forward-shift position "S", reverse drive position "R" and neutral position "N", on the basis of the signal levels of the normally functioning three ON-OFF switches and according to the second or defective-state position judging rules of Figs. 17A-17D, so that the transmission 16 can be shifted according to the detected position of the shift lever 170.

It will be understood from Figs. 19-22 that the present shift lever position detecting device is adapted to prevent said first position judging means 260 from effecting an erroneous judgement of the shifting movement of the shift lever 170 to the manual forward-shift position "S" as the shifting movement to the reverse drive position "R" or vice versa, and an erroneous judgement of the shifting movement to the neutral position "N" as the shifting movement to the manual forward-shift position "S" or reverse drive position "R", before the first switch failure detecting means 264 detects a failure of one of the four ON-OFF switches SW1-SW4, which failure would cause such erroneous judgments. This arrangement eliminates a risk of a reverse running the vehicle in the direction opposite to the vehicle operator's desired running direction, or an unintended starting of the vehicle, even during a short time period after the occurrence of a failure of one of the ON-OFF switches SW1-SW4 and before the detection of this failure by the first switch failure detecting means 264.

The shift lever position detecting device is further adapted to prevent the second position judging means 262 from effecting an erroneous judgement of the shifting movement of the shift lever 170 to the manual forward-shift position "S" as the shifting movement to the rear drive position "R" or vice versa, and an erroneous judgement of the shifting movement to the neutral position "N" as the shifting movement to the manual forward-shift position "S" or reverse drive position "R", before the second switch failure detecting means 266 detects a failure of another ON-OFF switch, which failure would cause such erroneous judgements, except where the failure of this another ON-OFF switch is the type B or C failure. This arrangement minimizes the possibility of the above-indicated reverse running or unintended starting of the vehicle, even during a short time period after the occurrence of the failure of the above-indicated another ON-OFF switch and before the detection of this failure by the second switch failure detecting means 266.

While the tenth embodiment of this invention has been described above, this embodiment may be modified as needed.

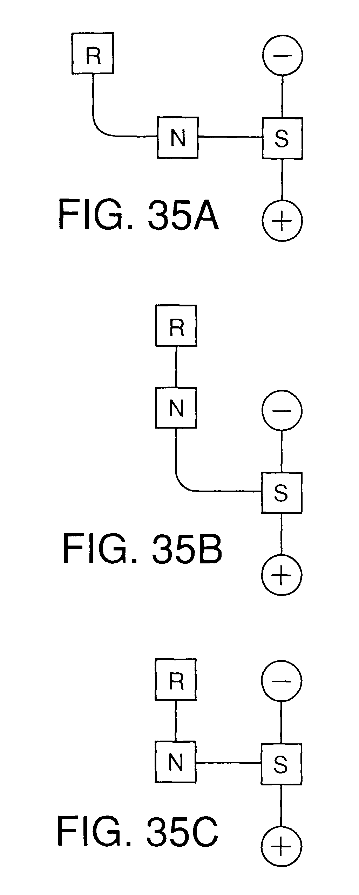

For instance, the shift lever device 248 shown in Figs. 10A and 10B may be modified so as to support the shift lever 170 such that the shift lever has one of shift patterns shown in Figs. 35A, 35B and 35C according to eleventh, twelfth and thirteenth embodiments of the invention, respectively. Further, the shift lever may have an automatic forward-shift position in which the transmission 16 is automatically shifted depending upon the running conditions or parameters of the vehicle.

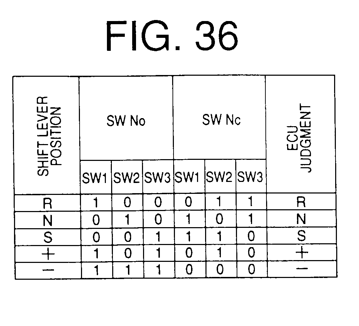

While the shift lever position detecting detecting device 143 consists of the four ON-OFF switches SW1-SW4, the shift lever position detecting device may consist of three ON-OFF switches SW1-SW3 which are arranged to detect the currently established one of the five operating positions "R", "N", "S", "(+)" and "(-)" of the shift lever 170, as shown in Fig. 36, according to a fourteenth embodiment of this invention. Fig. 36 corresponds to Fig. 16 of the tenth embodiment, and indicates the first position shifting rule used by the normal-state position judging means 260.

While the tenth embodiment is adapted to detect the intermediate or transient positions "Nr" and "Ns", the detection of these transient positions is not essential.

Although the arrangement of the four ON-OFF switches SW1-SW4 is shown in Figs. 11 and 12, for illustrative purpose only, to indicate specific combinations of the operating states of the switches SW1-SW4 when the shift lever 170 are located at the respective operating positions "R", "N", "S", "(-)" and "(+)", it is to be understood that the arrangement of the ON-OFF switches may be modified as needed.

The tenth embodiment of Figs. 9-34 may be modified such that the shift-up position "(+)" is located frontwards of the shift-down position "(-)" as in the first through ninth embodiments of Figs. 1-8.

While the various presently preferred embodiments of the present invention have been described above by reference to the drawings, it is to be understood that the prevent invention may be embodied with various changes, modifications and improvements, which may occur to those skilled in the art.
Vehicle drive device including a transmission (16) and a shift lever device (172, 200, 206, 212, 218, 224, 230, 236, 242) constructed to support a shift lever (17) such that the shift lever is shifted from a manual forward-shift position for manually shifting up and down the transmission, to another operating position of the transmission, by a first movement of the shift lever from the manual forward-shift position to a turning point in a first direction and at least a second movement of the shift lever from the turning point in a second direction which intersects the first direction so as to prevent the second movement of the shift lever to prevent a shifting of the shift lever to the above-indicated another operating position, wherein the shift lever device including a biasing device for biasing the shift lever from the turning point toward the manual forward-shift position, and the transmission is held in the currently established forward drive position even when the shift lever is located at the turning point. Also disclosed is a device including ON-OFF switches (SW1-SW4) for detecting a currently established one of the operating positions of the shift lever.

## Claims

1. A drive system of an automotive vehicle including a transmission (16) having a plurality of operating positions including a plurality of forward drive positions for forward running of the vehicle, a shifting actuator device (76, 78) for selectively establishing one of said plurality of operating positions, and a shift lever device including a shift lever (170) which has a manual forward-shift position for maintaining a currently established one of said forward drive positions or manually shifting up or down said transmission during forward running of the vehicle with said transmission placed in the currently established forward drive position, and another operating position other than said manual forward-shift position, **characterized in that**
said shift lever device (172, 200, 206, 212, 218, 224, 230, 236, 242) is constructed to support said shift lever (170) such that said shift lever is shifted from said manual forward-shift position to said another operating position by a first movement thereof from said manual forward-shift position to a first turning point in a first direction and at least a second movement thereof from said first turning point in a second direction which interests said first direction so as to prevent said second movement and thereby to prevent a shifting of said shift lever to said another operating position even when a force acts on said shift lever in a direction substantially parallel to said first direction;
said shift lever device includes a biasing device (186) for biasing said shift lever from said first turning point toward said manual forward-shift position; and
position holding means (102, 104, 116, 140) is operatively associated with said shifting actuator device (76, 78) such that said transmission is held in the currently established forward drive position while said shift lever is located at one of or between said manual forward-shift position and said first turning point.

2. A drive system according to claim 1, wherein said position holding means includes a shift lever sensor device (140) for detecting an operation of said shift lever, and a controller (102, 104, 116) electrically connected to said shifting actuator device (76, 78) for controlling said shifting actuator device on the basis of output signals of said lever position sensor device.

3. A drive system according to claim 1 or 2, wherein said plurality of operating positions of said transmission further includes a power cut-off position for cutting off a drive force to be transmitted to drive wheels (84) of the automotive vehicle, and said another operating position of said shift lever is a neutral position for establishing said power cut-off position of said transmission.

4. A drive system according to claim 3, wherein said plurality of operating positions of said transmission further include a rear drive position for backward running of the automotive vehicle, and said shift lever further has a reverse drive position for establishing said rear drive position of said transmission,
and wherein said shift lever device (172, 200, 206, 212, 218, 224, 230, 236, 242) is further constructed to support said shift lever such that said shift lever is shifted from said neutral position to said reverse drive position by a third movement thereof from said neutral position to a second turning point in a third direction and at least a fourth movement thereof from said second turning point in a fourth direction which intersects said third direction so as to prevent said fourth movement and thereby to prevent a shifting of said shift lever to said reverse drive position even when a force acts on said shift lever in a direction substantially parallel to said third direction, said shift lever device including a biasing device (188) for biasing said shift lever from said second turning point toward said neutral position, said position holding means (102, 104, 116, 140) being operatively associated with said shifting actuator device (76, 78) such that said transmission is held in said power cut-off position while said shift lever is located at one of or between said neutral position and said second turning point.

5. A drive system according to claim 4, wherein said third direction is substantially perpendicular to said second direction.

6. A drive system according to any one of claims 1-5, wherein said shift lever device further includes a resisting mechanism (190) for giving a resistance to said second movement of said shift lever from said first turning point to said another operating position in said second direction such that said resistance has a peak value when said shift lever is located intermediate between said first turning point and said another operating position.

7. A drive system according to any one of claims 4-6, wherein said shift lever device further includes a resisting mechanism (192) for giving a resistance to said second movement of said shift lever from said second turning point to said reverse drive position, such that said resistance has a peak value when said shift lever is located intermediate between said second turning point and said reverse drive position.

8. A drive system according to any one of claims 3-7, wherein said shift lever further has an automatic forward-shift position in which said shifting actuator device (76, 78) is controlled in an automatic shifting mode to establish one of said plurality of forward drive positions of said transmission, on the basis of running conditions of the automotive vehicle, and said shift lever device (200, 242) is further constructed to support said shift lever such that said shift lever is shifted from said manual forward-shift position to said automatic forward-shift position by a movement thereof in a direction which is parallel and opposite to said first direction.

9. A drive system according to any one of claims 3-7, wherein said shift lever further has an automatic forward-shift position in which said shifting actuator device (76, 78) is controlled in an automatic shifting mode to establish one of said plurality of forward drive positions of said transmission, on the basis of running conditions of the automotive vehicle, and said shift lever device (206) is further constructed to support said shift lever such that said shift lever is shifted from said first turning point to said automatic forward-shift position by a movement thereof in a direction which is parallel and opposite to said second direction.

10. A drive system according to any one of claims 4-7, wherein said shift lever further has an automatic forward-shift position in which said shifting actuator device (76, 78) is controlled in an automatic shifting mode to establish one of said plurality of forward drive positions of said transmission, on the basis of running conditions of the automotive vehicle, and said shift lever device (212) is further constructed to support said shift lever such that said shift lever is shifted from said second turning point to said automatic forward-shift position by a movement thereof in a direction which is parallel and opposite to said fourth direction.

11. A drive system according to any one of claims 3-7, wherein said shift lever further has an automatic forward-shift position in which said shifting actuator device (76, 78) is controlled in an automatic shifting mode to establish one of said plurality of forward drive positions of said transmission, on the basis of running conditions of the automotive vehicle, and said shift lever device (218) is further constructed to support said shift lever such that said shift lever is shifted from said neutral position to said automatic forward-shift position by a movement thereof in said second direction.

12. A drive system according to any one of claims 4-7, wherein said shift lever further has an automatic forward-shift position in which said shifting actuator device (76, 78) is controlled in an automatic shifting mode to establish one of said plurality of forward drive positions of said transmission, on the basis of running conditions of the automotive vehicle, and said shift lever device (224) is further constructed to support said shift lever such that said shift lever is shifted from said second turning point to said automatic forward-shift position by a movement thereof in said third direction.

13. A drive system according to any one of claims 4-7, wherein said shift lever further has an automatic forward-shift position in which said shifting actuator device (76, 78) is controlled in an automatic shifting mode to establish one of said plurality of forward drive positions of said transmission, on the basis of running conditions of the automotive vehicle, and said shift lever device (230) is further constructed to support said shift lever such that said shift lever is shifted from said neutral position to said automatic forward-shift position by a movement thereof in a direction which is parallel and opposite to said third direction.

14. A drive system according to any one of claims 3-7, wherein said shift lever further has an automatic forward-shift position in which said shifting actuator device (76, 78) is controlled in an automatic shifting mode to establish one of said plurality of forward drive positions of said transmission, on the basis of running conditions of the automotive vehicle, and said shift lever device (236) is further constructed to support said shift lever such that said shift lever is shifted from said first turning point to said automatic forward-shift position by a movement thereof in said second direction.

15. A drive system according to any one of claims 1-14, wherein said shift lever further has a shift-up position and a shift-down position which are located on opposite sides of said manual forward-shift position and to which said shift lever is shiftable from said manual forward-shift position for manually shifting up and down said transmission, respectively, said shift-up and shift-down positions being spaced from each other in a shifting direction which intersects said first direction.

16. A drive system according to claim 15, wherein said shifting direction is substantially parallel to a running direction of the automotive vehicle.

17. A drive system according to claim 15 or 16, wherein said first direction is substantially perpendicular to said shifting direction.

18. A drive system according to any one of claims 17, wherein said first and second directions are substantially perpendicular to each other.

19. A drive system according to any one of claims 4-18, wherein said third and fourth directions are substantially perpendicular to each other.

20. A shift lever device including a shift lever (170) for shifting a transmission (16) of an automotive vehicle, said transmission having a plurality of operating positions including a plurality of forward drive positions for forward running of the vehicle, which are selectively established by a shifting actuator device (76, 78), said shift lever having a manual forward-shift position for maintaining a currently established one of said forward drive positions or manually shifting up or down said transmission during forward running of the vehicle with said transmission placed in the currently established forward drive position, and another operating position other than said manual forward-shift position, **characterized in that**
said shift lever is supported such that said shift lever is shifted from said manual forward-shift position to said another operating position by a first movement thereof from said manual forward-shift position to a first turning point in a first direction and at least a second movement thereof from said first turning point in a second direction which intersects said first direction so as to prevent said second movement and thereby to prevent a shifting of said shift lever to said another operating position even when a force acts on said shift lever in a direction substantially parallel to said first direction, so that said transmission is held in the currently established forward drive position while said shift lever is located at one of or between said manual forward-shift position and said first turning point;
a biasing device (186) is provided for biasing said shift lever from said first turning point toward said manual forward-shift position.

21. A shift lever position detecting device for detecting a currently established one of five operating positions of a shift lever (170) for shifting a transmission (16) of an automotive vehicle, said five operating positions consisting of a manual forward-shift position for permitting said transmission to be manually shifted up and down from one of a plurality of forward drive positions thereof to another, a reverse drive position for placing said transmission in a rear drive position, a neutral position located between said manual forward-shift position and said reverse drive position for placing said transmission in a power cut-off position, a shift-up position which is located next to said manual forward-shift position and to which said shift lever is shiftable from said manual forward-shift position for manually shifting up said transmission, and a shift-down position which is located next to said manual forward-shift position and to which said shift lever is shiftable from said manual forward-shift position for manually shifting down said transmission, **characterized by comprising:**
three or four ON-OFF switches (SW1-SW3, SW1-SW4) each of which is mechanically switched between ON and OFF states thereof depending upon a movement of said shift lever (170) to at least one of said five operating positions such that five combinations of the operating states of said ON-OFF switches when said shift lever is placed in said five operating positions when said three or four ON-OFF switches are all normal are different from each other, said each ON-OFF switch generating a first signal whose level is low and high when said each ON-OFF switch is in the ON and OFF states, respectively, and a second signal whose level is high and low when said each ON-OFF switch is in the ON and OFF states, respectively;
first position judging means (260) for determining one of said five operating positions in which said shift lever is placed, according to a first position judging rule consisting of said five combinations of the operating states of said ON-OFF switches;
first switch failure detecting means (264) for checking each of said ON-OFF switches to detect a failure thereof, on the basis of the levels of said first and second signals of said each ON-OFF switch and according to said first position judging rule; and
second position judging means (262) for determining one of at least said manual forward-shift position, said reverse drive position and said neutral position in which said shift lever is placed, according to a second position judging rule consisting of said five combinations of the operating states of said three or four ON-OFF switches except the one whose failure has been detected by said first switch failure detecting means,
said five combinations of the operating states of said ON-OFF switches being determined to prevent said first position judging means from effecting at least an erroneous judgment of a shifting movement of said shift lever to said manual forward-shift position as a shifting movement to said reverse drive position or vice versa, and an erroneous judgment of a shifting movement of said shift lever to said neutral position as a shifting movement to said manual forward-shift position or said reverse drive position, before said first switch failure detecting means detects the failure of one of said ON-OFF switches, which failure would cause said erroneous judgments,
said five combinations being further determined to permit said second position judging means to correctly determine said one of at least said manual forward-shift position, said reverse drive position and said neutral position in which said shift lever is placed.

22. A shift lever position detecting device according to claim 21, wherein said ON-OFF switches consist of four ON-OFF switches (SW1-SW4), said shift lever position detecting device further comprising second switch failure detecting means (266) for checking each of the three ON-OFF switches other than the one whose failure has been detected by said first switch failure detecting means (264), to detect a failure of said each of said three ON-OFF switches, on the basis of the levels of said first and second signals of said three ON-OFF switches and according to said second position judging rule, and wherein said five combinations of the operating states of said four ON-OFF switches are determined to prevent said second position judging means from effecting at least said erroneous judgment of the shifting movement of said shift lever to said manual forward-shift position as the shifting movement to said reverse drive position or vice versa and said erroneous judgment of the shifting movement of said shift lever to said neutral position as the shifting movement to said manual forward-shift position or said reverse drive position, before said second switch failure detecting means detects the failure of one of said three ON-OFF switches, which failure would cause said erroneous judgments, except where said failure of said one of said three ON-OFF switches causes the levels of one and the other of said first and second signals thereof to be held high and low, respectively.

23. A shift lever position detecting device according to claim 22, wherein said four ON-OFF switches consist of:
a first ON-OFF switch (SW1) whose operating state is switched between said ON and OFF states when said shift lever is moved between one of said shift-up and shift-down positions and any of the other operating positions;
a second ON-OFF switch (SW2) whose operating state is switched between said ON and OFF states when said shift lever is moved between the other of said shift-up and shift-down positions and any one of the other operating positions;
a third ON-OFF switch (SW3) whose operating state is switched between said ON and OFF states when said shift lever is moved between one of said neutral position and said reverse drive position and any one of the other operating positions; and
a fourth ON-OFF switch (SW5) whose operating state is switched between said ON and OFF states when said shift lever is moved between said neutral position and any one of the other operating positions.

24. A shift lever position detecting device according to any one of claims 21-23, wherein said shift lever is supported such that said shift lever is shifted from said manual forward-shift position to said neutral position by a first movement thereof from said manual forward-shift position to a first turning point in a first direction and at least a second movement thereof from said first turning point in a second direction which intersects said first direction so as to prevent said second movement and thereby to prevent a shifting of said shift lever to said neutral position even when a force acts on said shift lever in a direction substantially parallel to said first direction, so that said transmission is held in the currently established forward drive position while said shift lever is located at said first turning point or between said manual forward-shift position and said first turning point, said shift lever being biased from said first turning point toward said manual forward-shift position.
